# EUROPEAN PATENT APPLICATION

(11) **EP 4 729 589 A1**
(43) Date of publication of application: **22.04.2026**
(21) Application number: 24836050.5
(22) Date of filing: 02.07.2024
(51) Int. Cl.: C09J 167/00, C09J 7/35, C09J 163/00, H01M 8/0284, H01M 8/10

(54) **HOT-MELT ADHESIVE SHEET**

(30) Priority: 04.07.2023 JP 2023110117
(71) Applicant: Nitto Shinko Corporation, Sakai-shi, Fukui 910-0381 (JP)
(72) Inventor: TAKABATAKE, Ryota, Sakai-shi, Fukui 910-0381 (JP); TABUCHI, Akihiro, Sakai-shi, Fukui 910-0381 (JP); AOIKE, Shuhei, Sakai-shi, Fukui 910-0381 (JP); NOJIRI, Akito, Sakai-shi, Fukui 910-0381 (JP)
(74) Representative: Stolmár & Partner Patentanwälte PartG mbB
(86) International application number: PCT/JP2024/023972
(87) International publication number: WO 2025/009537

(57) **Abstract**

A hot melt adhesive sheet according to the present invention includes a base material and an adhesive layer laminated on at least one surface of the base material, in which the adhesive layer is made of a hot melt adhesive, the hot melt adhesive includes a crosslinked product of an adhesive composition including a crosslinking agent, and the adhesive composition includes a polyester resin, an epoxy resin, and an isocyanate-based crosslinking agent, the epoxy resin includes a bisphenol-type epoxy resin and a rubber-modified epoxy resin, and the bisphenol-type epoxy resin has an epoxy equivalent of 450 g/eq or more and 1000 g/eq or less.

## Description

### CROSS-REFERENCE TO RELATED APPLICATION

This application claims priority to Japanese Patent Application No. 2023-110117, the disclosure of which is incorporated herein by reference in its entirety.

### FIELD

The present invention relates to a hot melt adhesive sheet.

### BACKGROUND

Conventionally known is a hot melt adhesive sheet including an adhesive layer made of a hot melt adhesive. Also known is that such a hot melt adhesive sheet is configured to adhere to a solid electrolyte membrane of a solid polymer fuel cell for use (for example, Patent Literature 1 below).

As described in Patent Literature 1 below, the solid polymer fuel cell generally includes a membrane electrode assembly (MEA). The membrane electrode assembly (MEA) has surfaces opposite to each other, on which a positive electrode and a negative electrode are respectively disposed. In the solid polymer fuel cell, the positive electrode generally has a positive electrode gas diffusion layer disposed on a positive electrode catalyst layer. In the solid polymer fuel cell, the negative electrode generally has a negative electrode gas diffusion layer disposed on a negative electrode catalyst layer. In the membrane electrode assembly (MEA), the positive electrode catalyst layer in the positive electrode is disposed on one surface of the solid electrolyte membrane. In the membrane electrode assembly (MEA), the negative electrode catalyst layer in the negative electrode is disposed on the other surface of the solid electrolyte membrane.

The positive electrode catalyst layer and the negative electrode catalyst layer are each configured to have a smaller plane dimension than that of the solid electrolyte membrane. The positive electrode gas diffusion layer is configured to have a smaller plane dimension than that of the positive electrode catalyst layer. The negative electrode gas diffusion layer is configured to have a smaller plane dimension than that of the negative electrode catalyst layer.

Thus, when the membrane electrode assembly (MEA) is seen from one surface side in plan view, an outer end edge of the solid electrolyte membrane on one surface thereof is located outside an outer end edge of the positive electrode catalyst layer in the positive electrode. When the membrane electrode assembly (MEA) is seen from the other surface side in plan view, an outer end edge of the solid electrolyte membrane on the other surface thereof is located outside an outer end edge of the negative electrode catalyst layer in the negative electrode. That is, when the membrane electrode assembly (MEA) is seen from the one surface side in plan view, one exposed surface is formed on a side of the outer end edge on the one surface of the solid electrolyte membrane between the outer end edge on the one surface of the solid electrolyte membrane and the outer end edge of the positive electrode catalyst layer. When the membrane electrode assembly (MEA) is seen from the other surface side in plan view, another exposed surface is formed on a side of the outer end edge on the other surface of the solid electrolyte membrane between the outer end edge on the other surface of the solid electrolyte membrane and the outer end edge of the negative electrode catalyst layer.

As described in Patent Literature 1 below, the adhesion of the hot melt adhesive sheet to the solid electrolyte membrane is carried out to have the one exposed surface of the solid electrolyte membrane and the other exposed surface of the solid electrolyte membrane sandwiched between two hot melt adhesive sheets. More specifically, the adhesive layer of one of the two hot melt adhesive sheets is configured to adhere to the one exposed surface of the solid electrolyte membrane. The adhesive layer of the other one of the two hot melt adhesive sheets is configured to adhere to the other exposed surface of the solid electrolyte membrane.

### CITATION LIST

### Patent Literature

Patent Literature 1: WO 2019/216402 A

### SUMMARY

### Technical Problem

After the adhesive layer of the one of the two hot melt adhesive sheets is caused to adhere to the one exposed surface of the solid electrolyte membrane and the adhesive layer of the other one of the two hot melt adhesive sheets is caused to adhere to the other exposed surface of the solid electrolyte membrane, as described above, a large gap may be formed between the outer end edge of the solid electrolyte membrane and the adhesive layers. In other words, an outer end edge portion of the solid electrolyte membrane may fail to be sufficiently embedded with the adhesive layer of the hot melt adhesive sheet.

After the adhesive layer of the one of the two hot melt adhesive sheets is caused to adhere to the one exposed surface of the solid electrolyte membrane and the adhesive layer of the other one of the two hot melt adhesive sheets is caused to adhere to the other exposed surface of the solid electrolyte membrane, each of the adhesive layers may have an uneven thickness.

The failure to sufficiently embed the outer end edge of the solid electrolyte membrane with the adhesive layer of the hot melt adhesive sheet, and the uneven thickness of the adhesive layer of the hot melt adhesive sheet result in a degraded power generation efficiency of the solid polymer fuel cell, which is not preferable. However, no sufficient consideration appears to have yet to be made both on sufficiently embedding the outer end edge of the solid electrolyte membrane with the adhesive layer of the hot melt adhesive sheet and on suppressing the adhesive layer of the hot melt adhesive sheet from having an uneven thickness.

The present invention has been conceived to solve the above problems, and it is an object to provide a hot melt adhesive sheet capable of, after an adhesive layer is caused to adhere to a solid electrolyte membrane of a solid polymer fuel cell, both sufficiently embedding an outer end edge of the solid electrolyte membrane with the adhesive layer and suppressing the adhesive layer from having an uneven thickness.

### Solution to Problem

A hot melt adhesive sheet according to the present invention includes a base material and an adhesive layer laminated on at least one surface of the base material, in which the adhesive layer is made of a hot melt adhesive, the hot melt adhesive includes a crosslinked product of an adhesive composition including a crosslinking agent, the adhesive composition includes a polyester resin, an epoxy resin, and an isocyanate-based crosslinking agent, the epoxy resin includes a bisphenol-type epoxy resin and a rubber-modified epoxy resin, and the bisphenol-type epoxy resin has an epoxy equivalent of 450 g/eq or more and 1000 g/eq or less.

### BRIEF DESCRIPTION OF DRAWINGS

Fig. 1 is a schematic cross-sectional view showing a configuration of a hot melt adhesive sheet according to one embodiment of the present invention.
Fig. 2 is a schematic cross-sectional view showing a state where the hot melt adhesive sheet according to the one embodiment of the present invention is attached to a solid electrolyte membrane of a solid polymer fuel cell for use.

### DESCRIPTION OF EMBODIMENTS

A description will be hereinafter given on a hot melt adhesive sheet according to one embodiment of the present invention with reference to the drawings. Hereinafter, one embodiment of the present invention may be referred to simply as this embodiment.

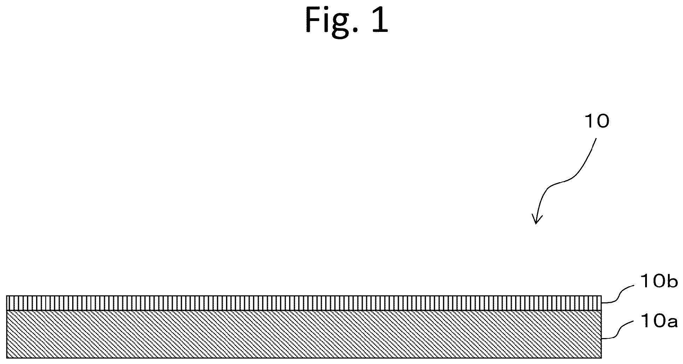

As shown in Fig. 1, a hot melt adhesive sheet 10 according to this embodiment is a hot melt adhesive sheet including a base material 10a having one surface on which an adhesive layer 10b made of a hot melt adhesive is laminated. In the hot melt adhesive sheet 10 shown in Fig. 1, the adhesive layer 10b is laminated only on the one surface of the base material 10a, but the adhesive layer 10b can be disposed laminated on an other surface of the base material 10a. That is, the hot melt adhesive sheet 10 can be a hot melt adhesive sheet with the adhesive layers 10b laminated on both surfaces of the base material 10a.

In the hot melt adhesive sheet 10 according to this embodiment, the hot melt adhesive includes a crosslinked product of an adhesive composition including a crosslinking agent. In the hot melt adhesive sheet 10 according to this embodiment, the adhesive composition includes a polyester resin, an epoxy resin, and an isocyanate-based crosslinking agent. In the hot melt adhesive sheet 10 according to this embodiment, the epoxy resin includes a bisphenol-type epoxy resin and a rubber-modified epoxy resin. In the hot melt adhesive sheet 10 according to this embodiment, the bisphenol-type epoxy resin has an epoxy equivalent of 450 g/eq or more and 1000 g/eq or less.

Hereinafter, the polyester resin will be referred to as polyester resin (A). The epoxy resin will be referred to as epoxy resin (B). The isocyanate-based crosslinking agent will be referred to as isocyanate-based crosslinking agent (C). Of the polyester resin (A), a crystalline polyester resin will be referred to as crystalline polyester resin (a1). Of the polyester resin (A), an amorphous polyester resin will be referred to as amorphous polyester resin (a2). Further, of the epoxy resin (B), the bisphenol-type epoxy resin will be referred to as bisphenol-type epoxy resin (b1). Of the epoxy resin (B), the rubber-modified epoxy resin will be referred to as rubber-modified epoxy resin (b2).

The hot melt adhesive sheet 10 according to this embodiment is, for example, configured to adhere to a solid electrolyte membrane 201 of a solid polymer fuel cell for use, as will be described later. The solid polymer fuel cell generally includes a membrane electrode assembly (MEA) 20. The membrane electrode assembly (MEA) 20 has surfaces opposite to each other, on which a positive electrode 202 and a negative electrode 203 are respectively disposed. In the membrane electrode assembly (MEA) 20, the positive electrode 202 has a positive electrode catalyst layer 202a, and a positive electrode gas diffusion layer 202b disposed on the positive electrode catalyst layer 202a. In the membrane electrode assembly (MEA) 20, the negative electrode 203 has a negative electrode catalyst layer 203, and a negative electrode gas diffusion layer 203b disposed on the negative electrode catalyst layer 203a. That is, in the membrane electrode assembly (MEA) 20, the positive electrode catalyst layer 202a and the positive electrode gas diffusion layer 202b are disposed in this order to form the positive electrode 202 on one surface of the solid electrolyte membrane 201. In the membrane electrode assembly (MEA) 20, the negative electrode catalyst layer 203a and the negative electrode gas diffusion layer 203b are disposed in this order to form the negative electrode 203 on the other surface of the solid electrolyte membrane 201.

When the membrane electrode assembly (MEA) 20 is seen from one surface side in plan view, the solid electrolyte membrane 201 has, on the one surface, an outer end edge located outside an outer end edge of the positive electrode catalyst layer 202a. When the membrane electrode assembly (MEA) 20 is seen from the one surface side in plan view, the outer end edge of the positive electrode catalyst layer 202a is located outside an outer end edge of the positive electrode gas diffusion layer 202b. When the membrane electrode assembly (MEA) 20 is seen from an other surface side in plan view, the solid electrolyte membrane 201 has, on the other surface, an outer end edge located outside an outer end edge of the negative electrode catalyst layer 203a. When the membrane electrode assembly (MEA) 20 is seen from the other surface side in plan view, the outer end edge of the negative electrode catalyst layer 203a is located outside an outer end edge of the negative electrode gas diffusion layer 203b. That is, on the side of the outer end edge on the one surface of the solid electrolyte membrane 201, a first exposed surface (positive electrode side electrolyte membrane exposed area 201a to be described later) is formed between the outer end edge on the one surface of the solid electrolyte membrane 201 and the outer end edge of the positive electrode catalyst layer 202a. On the side of the outer end edge of the positive electrode catalyst layer 202a, a second exposed surface (positive electrode side catalyst layer exposed area 202a1 to be described later) is formed between the outer end edge of the positive electrode catalyst layer 202a and the positive electrode gas diffusion layer 202b. On the side of the outer end edge on the other surface of the solid electrolyte membrane 201, a third exposed surface (negative electrode side electrolyte membrane exposed area 201b to be described later) is formed between the outer end edge on the other surface of the solid electrolyte membrane 201 and the outer end edge of the negative electrode catalyst layer 203a. Further, a fourth exposed surface (negative electrode side catalyst layer exposed area 203a1 to be described later) is formed between the outer end edge of the negative electrode catalyst layer 203a and the negative electrode gas diffusion layer 203b.

In the membrane electrode assembly (MEA) 20 configured as above, the adhesion of the hot melt adhesive sheet 10 to the solid electrolyte membrane 201 is carried out using two hot melt adhesive sheets 10 to sandwich the solid electrolyte membrane 201 from both surface sides (i.e., one surface side and other surface side) of the solid electrolyte membrane 201. Sandwiching the solid electrolyte membrane 201 between the two hot melt adhesive sheets 10 from both surface sides is carried out by causing the adhesive layer 10b of one hot melt adhesive sheet 10 to adhere to the first exposed surface formed on the one surface of the solid electrolyte membrane 201 and the second exposed surface formed on the positive electrode catalyst layer 202a, and causing the adhesive layer 10b of the other hot melt adhesive sheet 10 to adhere to the third exposed surface formed on the other surface of the solid electrolyte membrane 201 and the fourth exposed surface formed on the negative electrode catalyst layer 203a.

The epoxy equivalent (unit: g/eq) herein refers to the molecular weight of the epoxy resin per functional group (glycidyl group). Thus, the smaller the epoxy equivalent value is, the larger the number of epoxy groups becomes per structural unit in the epoxy resin. The larger the epoxy equivalent value is, the smaller the number of epoxy groups becomes per structural unit in the epoxy resin. Thus, when an epoxy resin with a smaller epoxy equivalent value is used, such an epoxy resin is cured in a higher crosslinking density. That is, an epoxy resin with a small epoxy equivalent value becomes a cured product having a high crosslinking density after being crosslinked. When, in contrast, an epoxy resin with a larger epoxy equivalent value is used, such an epoxy resin is cured in a lower crosslinking density. That is, an epoxy resin with a large epoxy equivalent value becomes a cured product having a low crosslinking density after being crosslinked. The cured product having a high crosslinking density has high mechanical strength, but has poor ductility resulting from the high mechanical strength. The cured product having a low crosslinking density has high ductility, but has poor mechanical strength resulting from the high ductility.

In the hot melt adhesive sheet 10 according to this embodiment, the hot melt adhesive for forming the adhesive layer 10b includes the bisphenol-type epoxy resin having a reasonable epoxy equivalent of 450 g/eq or more and 1000 g/eq or less; thus, the bisphenol-type epoxy resin can be crosslinked in the adhesive layer 10b in a reasonable crosslinking density when the adhesive layer 10b is heated for use. The adhesive layer 10b of the hot melt adhesive sheet 10 according to this embodiment can thus exhibit reasonable mechanical strength and reasonable ductility in good balance when heated for use. That is, the adhesive layer 10b of the hot melt adhesive sheet 10 according to this embodiment can exhibit suitable toughness when heated for use. The hot melt adhesive further includes the polyester resin in addition to the bisphenol-type epoxy resin as above. The polyester resin has a high elastic modulus, and has excellent restoration properties resulting from the high elastic modulus. Thus, the adhesive layer 10b made of the hot melt adhesive when heated for use can exhibit the restoration properties caused by the polyester resin in addition to the toughness caused by the bisphenol-type epoxy resin.
Further, the hot melt adhesive includes the rubber-modified epoxy resin as the epoxy resin; thus, the adhesive layer 10b made of the hot melt adhesive can exhibit reasonable rubber elasticity when heated for use. The adhesive layer 10b of the hot melt adhesive sheet 10 according to this embodiment having the properties as above can sufficiently suppress the formation of the gaps between the adhesive layer 10b of the one hot melt adhesive sheet 10 and the outer end edge of the solid electrolyte membrane 201 and the gaps between the adhesive layer 10b of the other hot melt adhesive sheet 10 and the outer end edge of the solid electrolyte membrane 201, when the adhesive layer 10b of the one hot melt adhesive sheet 10 is caused to adhere to the first exposed surface of the solid electrolyte membrane 201 and the adhesive layer 10b of the other hot melt adhesive sheet 10 is caused to adhere to the third exposed surface of the solid electrolyte membrane 201 for use, as has been described above. That is, the outer end edge of the solid electrolyte membrane 201 can be sufficiently embedded with the adhesive layer 10b of the one hot melt adhesive sheet 10 and the adhesive layer 10b of the other hot melt adhesive sheet 10. Since the adhesive layer 10b of the hot melt adhesive sheet 10 has the properties as above, particularly the restoration properties and the rubber elasticity, the adhesive layer 10b of the one hot melt adhesive sheet 10 and the adhesive layer 10b of the other hot melt adhesive sheet 10 can be suppressed from having an uneven thickness when the adhesive layer 10b of the one hot melt adhesive sheet 10 is caused to adhere to the first exposed surface of the solid electrolyte membrane 201 and the adhesive layer 10b of the other hot melt adhesive sheet 10 is caused to adhere to the third exposed surface of the solid electrolyte membrane 201 for use.

### (Polyester resin (A))

As the polyester resin (A), employed can be a product obtained by dehydration condensation of a polycarboxylic acid and a polyol. As the polyester resin (A), various known products can be employed. The polyester resin (A) can be an unmodified polyester resin, or can be a modified polyester resin. The unmodified polyester resin means a polyester resin with its structure partially unmodified by a modifying component. The modified polyester resin means a polyester resin with its structure partially modified by a modifying component.

The modified polyester resin can be a urethane-modified polyester resin with its structure partially modified by an isocyanate component as the modifying component, or can be a silicone-modified polyester resin with its structure partially modified by a silicone component as the modifying component.

The urethane-modified polyester resin can be obtained by dehydration condensation of the polycarboxylic acid and the polyol to obtain a polyester resin, followed by causing a terminal hydroxyl group of the polyester resin to react with the isocyanate component. The urethane-modified polyester resin can also be obtained by causing the polycarboxylic acid, the polyol, and the isocyanate component to simultaneously react with each other. Examples of a commercially available product of the urethane-modified polyester resin include trade name "VYLON (registered trademark) UR-3210" manufactured by TOYOBO Co., Ltd. and "VYLON (registered trademark) UR-4410" manufactured by TOYOBO Co., Ltd.

The silicone-modified polyester resin can be obtained by, for example, causing the polycarboxylic acid, the polyol, and a modified silicone component having a reactive functional group at one or both terminals to react with each other. Examples of the reactive functional group included in the modified silicone component include a hydroxy group, a carboxy group, and an epoxy group.

The polyester resin (A) can be the crystalline polyester resin (a1) or the amorphous polyester resin (a2). That is, the unmodified polyester resin and the modified polyester resin can be the crystalline polyester resin (a1) or the amorphous polyester resin (a2).

The crystalline polyester resin (a1) means a polyester resin showing at least one of a peak derived from crystallization and a peak derived from crystal melting in measurements using a differential scanning calorimetry (DSC) apparatus, among the unmodified polyester resin and the modified polyester resin. The amorphous polyester resin (a2) means a polyester resin showing neither a peak derived from crystallization nor a peak derived from crystal melting in measurements using a differential scanning calorimetry (DSC) apparatus, among the unmodified polyester resin and the modified polyester resin.

Thus, when it is necessary to determine whether the polyester resin (A) is the crystalline polyester resin (a1) or the amorphous polyester resin (a2), such determination can be carried out depending on whether or not at least one of the peak derived from crystallization and the peak derived from crystal melting is confirmed by the measurements using the DSC apparatus.

Examples of a commercially available product of the crystalline polyester resin (a1) include trade name "GM920" (manufactured by TOYOBO Co., Ltd.), trade name "GM913" (manufactured by TOYOBO Co., Ltd.), trade name "GM-350" (manufactured by TOYOBO Co., Ltd.), trade name "GM-900" (manufactured by TOYOBO Co., Ltd.), trade name "UE-9400" (manufactured by UNITIKA LTD.), trade name "UE-3400" (manufactured by UNITIKA LTD.), and trade name "UE-3410" (manufactured by UNITIKA LTD.)

In the adhesive layer 10b of the hot melt adhesive sheet 10 in which part of the epoxy resin (B) is not in the state of being ring-open (unreacted), when the polyester resin (A) is hydrolyzed to have short chains having hydroxyl groups or carboxy groups at molecular terminals, these functional groups can be caused to react with the unreacted epoxy groups to bring the polyester resin (A) back into the crystalline polyester resin having long chains.

Examples of the polycarboxylic acid composing the polyester resin (A) include: aromatic dicarboxylic acids such as terephthalic acid, isophthalic acid, orthophthalic acid, 1,4-naphthalenedicarboxylic acid, 1,5-naphthalenedicarboxylic acid, 2,6-naphthalenedicarboxylic acid, 2,7-naphthalenedicarboxylic acid, and biphenyl dicarboxylic acid; aromatic oxycarboxylic acids such as p-oxybenzoic acid and p-(hydroxyethoxy) benzoic acid; saturated aliphatic dicarboxylic acids such as succinic acid, adipic acid, azelaic acid, sebacic acid, and dodecane dicarboxylic acid; unsaturated aliphatic dicarboxylic acids such as fumaric acid, maleic acid, and itaconic acid; unsaturated alicyclic dicarboxylic acids such as tetrahydrophthalic acid; alicyclic dicarboxylic acids such as hexahydrophthalic acid and 1,2-cyclohexane dicarboxylic acid; and tricarboxylic acids and tetracarboxylic acids such as trimellitic acid, trimesic acid, and pyromellitic acid.

Examples of the polyol composing the polyester resin (A) include: aliphatic glycols such as ethylene glycol, 1,2-propanediol, 1,3-propanediol, 1,2-butanediol, 1,3-butanediol, 1,4-butanediol, 2,3-butanediol, 1,5-pentanediol, 1,6-hexanediol, neopentyl glycol, 3-methyl-1,5-pentanediol, and 2-butyl-2-ethyl-1,3-propanediol; oligoalkylene glycols such as diethylene glycol, triethylene glycol, and dipropylene glycol; alicyclic glycols such as 1,2-cyclohexanedimethanol, 1,3-cyclohexanedimethanol, and 1,4-cyclohexanedimethanol; polyalkylene ether glycols such as polyethylene glycol, polypropylene glycol, and polytetramethylene glycol; triols such as trimethylolethane, trimethylolpropane, glycerin, and pentaerythritol; ethylene oxide adducts or propylene oxide adducts of bisphenol A, and ethylene oxide adducts or propylene oxide adducts of hydrogenated bisphenol A.

The polyester resin (A) preferably includes the crystalline polyester resin (a1) having a softening point of 120 °C or more. The softening point of the crystalline polyester resin (a1) is the softening point determined by the ring and ball method in JIS K 7234. In the hot melt adhesive sheet 10 according to this embodiment, the adhesive layer 10b including the crystalline polyester resin (a1) having the softening point as above can be further suppressed from being softened in a high temperature (for example 95 °C) environment. This configuration allows the adhesive layer 10b to sufficiently embed the outer end edge of the solid electrolyte membrane 201 after being caused to adhere to each of the first exposed surface and the third exposed surface of the solid electrolyte membrane 201, thereby not only suppressing the adhesive layer 10b from having an uneven thickness but also being excellent in hot water resistance, acid resistance, and alcohol resistance. For example, in the case where the adhesive layer 10b of the hot melt adhesive sheet 10 according to this embodiment is caused to adhere to the solid electrolyte membrane of the solid polymer fuel cell as the adherend for use, the above configuration enables the adhesive layer 10b to sufficiently maintain adhesiveness to the solid electrolyte membrane 201 when the adhesive layer 10b is in contact with water and alcohols such as ethylene glycol, which are included in antifreeze, or is exposed to strong acidity at a high temperature such as 95 °C. Examples of a commercially available product of the crystalline polyester resin (a1) having a softening point of 120 °C or more can include trade name "GM-913" manufactured by TOYOBO Co., Ltd.

The softening point of the crystalline polyester resin (a1) can be 140 °C or less, 135 °C or less, 130 °C or less.

The crystalline polyester resin (a1) preferably has a glass transition temperature Tg of -65 °C or less. The crystalline polyester resin (a) having the glass transition temperature Tg as above can exhibit sufficient rubber state at a high temperature (for example, 95 °C). Thus, in the hot melt adhesive sheet 10 according to this embodiment, the adhesive layer 10b including the crystalline polyester resin (a1) having the glass transition temperature Tg as above can also exhibit sufficient rubber state in a high temperature environment. This configuration allows the adhesive layer 10b to sufficiently embed the outer end edge of the solid electrolyte membrane 201 after being caused to adhere to each of the first exposed surface and the third exposed surface of the solid electrolyte membrane 201, thereby not only suppressing the adhesive layer 10b from having an uneven thickness but also being excellent in hot water resistance, acid resistance, and alcohol resistance. Examples of a commercially available product of the crystalline polyester resin (a1) having a glass transition temperature Tg of -65 °C or less can include the above trade name "GM-913" (manufactured by TOYOBO Co., Ltd.)

The glass transition temperature Tg of the crystalline polyester resin (a1) can be measured using, for example, a differential scanning calorimetry (DSC) apparatus. More specifically, a sample (crystalline polyester resin (a1)) is heated from a temperature lower by 30K or more to a temperature higher by 30K or more than an expected glass transition temperature Tg at a temperature rising rate of 5 °C/min under nitrogen gas flow to obtain a DSC curve, from which the glass transition temperature of the sample can be determined. The glass transition temperature Tg can be obtained by determining the intermediate point glass transition temperature based on the method described in JIS K7121:1987 "Testing Methods for Transition Temperatures of Plastics".

The glass transition temperature Tg of the crystalline polyester resin (a1) can be -90 °C or more, -80 °C or more, -75 °C or more.

In terms of producing an effect of being excellent in hot water resistance, acid resistance, and alcohol resistance, the polyester resin (A) includes preferably 50 mass % or more, more preferably 60 mass % or more, further preferably 70 mass % or more, particularly preferably 80 mass % or more, most preferably 90 mass % or more, of the crystalline polyester resin (a1). In terms of particularly suitably producing the effect of being excellent in hot water resistance, acid resistance, and alcohol resistance, the polyester resin (A) is particularly preferably made entirely of the crystalline polyester resin (a1). That is, it is particularly preferable that the polyester resin (A) include 100 mass % of the crystalline polyester resin (a1).

The crystalline polyester resin (a1) has a number average molecular weight Mn of preferably more than 30,000, more preferably 31,000 or more, further preferably 32,000 or more, particularly preferably 33,000 or more, most preferably 34,000 or more. The number average molecular weight Mn of the crystalline polyester resin (a1) is preferably 40,000 or less, more preferably 39,000 or less, further preferably 38,000 or less, particularly preferably 37,000 or less, most preferably 36,000 or less. In the hot melt adhesive sheet 10 according to this embodiment, the adhesive layer 10b including the crystalline polyester resin (a1) having the number average molecular weight Mn as above can sufficiently embed the outer end edge of the solid electrolyte membrane 201 after being caused to adhere to each of the first exposed surface and the third exposed surface of the solid electrolyte membrane 201, thereby not only suppressing the adhesive layer 10b from having an uneven thickness but also being excellent in hot water resistance, acid resistance, and alcohol resistance.

The number average molecular weight Mn of the crystalline polyester resin (a1) can be measured by the gel penetration chromatography (GPC) method. The number average molecular weight Mn of the crystalline polyester resin (a1) can be measured, for example, using the following equipment and conditions.

### Measurement equipment and measurement conditions

- Equipment: Trade name "HLC-8020" (manufactured by Tosoh Corporation)
- Column: Trade names "TSKgel G2000HXL", "TSKgel G3000HXL", and "TSKgel G4000HXL", manufactured by Tosoh Corporation)
- Solvent: THF
- Flow rate: 1.0 mL/min
- Sample concentration: 2 g/L
- Injection volume: 100 µL
- Temperature: 40 °C
- Detector: Model number "RI-8020" (manufactured by Tosoh Corporation)
- Standard material: TSK standard polystyrene (manufactured by Tosoh Corporation)

The crystalline polyester resin (a1) has a melt viscosity at 200 °C of preferably 2,000 dPa·s or more, more preferably 3,000 dPa·s or more, further preferably 4,000 dPa·s or more, particularly preferably 5,000 dPa·s or more, most preferably 6,000 dPa·s or more. The crystalline polyester resin (a1) has a melt viscosity at 200 °C of preferably 10,000 dPa·s or less, more preferably 9,000 dPa·s or less, further preferably 8,000 dPa·s or less, particularly preferably 7,000 dPa·s or less. In the hot melt adhesive sheet 10 according to this embodiment, the adhesive layer 10b including the crystalline polyester resin (a1) having the melt viscosity as above can sufficiently embed the outer end edge of the solid electrolyte membrane 201 after being caused to adhere to each of the first exposed surface and the third exposed surface of the solid electrolyte membrane 201, thereby not only suppressing the adhesive layer 10b from having an uneven thickness but also being excellent in hot water resistance, acid resistance, and alcohol resistance.

The melt viscosity of the crystalline polyester resin (a1) can be measured using a microcompounder (manufactured by Thermo, trade name "HAAKE MiniLab II") under the conditions of 200 °C × 100 min⁻¹ × 1 min.

### (Epoxy resin (B))

As described above, the epoxy resin (B) includes the bisphenol-type epoxy resin (b1) and the rubber-modified epoxy resin (b2).

Examples of the bisphenol-type epoxy resin (b1) include a bisphenol A type epoxy resin, a bisphenol F type epoxy resin, and a bisphenol AD type epoxy resin. The bisphenol-type epoxy resin (b1) can be modified. That is, the bisphenol-type epoxy resin (b1) can be a modified bisphenol A type epoxy resin, can be a modified bisphenol F type epoxy resin, can be a modified bisphenol AD type epoxy resin. As described above, the bisphenol-type epoxy resin (b1) has an epoxy equivalent of 450 g/eq or more and 1000 g/eq or less. The epoxy equivalent can be determined in accordance with JIS K7236.

As the bisphenol-type epoxy resin (b1), the bisphenol A type epoxy resin can be preferably used. Examples of a commercially available product of such a bisphenol A type epoxy resin include trade names "jER 1001", "jER 1002", "jER 1003", "jER 1055", "jER 1004", and "jER 1004AF", which are manufactured by Mitsubishi Chemical Corporation.

The bisphenol-type epoxy resin (b1) can be included in an amount of 10 mass parts or more, 15 mass parts or more, 20 mass parts or more, based on 100 mass parts of the polyester resin (A). The bisphenol-type epoxy resin (b1) can be included in an amount of 50 mass parts or less, 40 mass parts or less, 30 mass parts or less, based on 100 mass parts of the polyester resin (A).

The rubber-modified epoxy resin (b2) is not particularly limited, and can be any known resin as long as it is a compound having at least one epoxy group in a molecule and having a structure derived from rubber. The rubber-modified epoxy resin (b2) can be individually used, or two or more kinds of the rubber-modified epoxy resin can be used in combination. Examples of the rubber-modified epoxy resin (b2) include a reactant between an epoxy resin and a rubber. As the epoxy resin, for example, the bisphenol-type epoxy resin (b1) as described above can be used.

Examples of the rubber include a natural rubber, an acrylonitrile butadiene rubber (NBR), a carboxyl-terminated butadiene-acrylonitrile rubber (CTBN), an amino-terminated butadiene-acrylonitrile rubber (ATBN), a styrene butadiene rubber (SBR), a hydrogenated nitrile rubber (HNBR), an ethylene propylene rubber (EPDM), an acrylic rubber (ACM), a butyl rubber (IIR), and a butadiene rubber. The rubber preferably has a functional group at the terminal that can react with an epoxy group, such as an amino group, a hydroxyl group, or a carboxyl group, in terms of its reactivity with the epoxy group.

In terms of, e.g., its availability and reactivity with the epoxy group, the rubber-modified epoxy resin (b2) is preferably a reactant between the epoxy resin and the acrylonitrile butadiene rubber (NBR) (NBR-modified epoxy resin), a reactant between the epoxy resin and the carboxyl-terminated acrylonitrile butadiene rubber (CTBN-modified epoxy resin), or a reactant between the epoxy resin and the amino-terminated acrylonitrile butadiene rubber (ATBN-modified epoxy resin), among which the NBR-modified epoxy resin is particularly preferable. Examples of a commercially available product of the NBR-modified epoxy resin include trade name "ADEKA RESIN EPR-1415-1" manufactured by ADEKA CORPORATION. The method for producing the rubber-modified epoxy resin (b2) is not particularly limited, and various known methods for producing can be employed as long as those methods enable the epoxy resin and the rubber to react with each other.

The physical properties of the rubber-modified epoxy resin (b2) are not particularly limited, but the rubber-modified epoxy resin preferably has an epoxy equivalent of 150 g/eq or more and 1000 g/eg or less in terms of, for example, the handlability and adhesive characteristics of the rubber-modified epoxy resin. The epoxy equivalent of the rubber-modified epoxy resin (b2) can also be determined in accordance with JIS K7236.

The rubber-modified epoxy resin (b2) can be included in an amount of 3 mass parts or more, 5 mass parts or more, 7 mass parts or more, based on 100 mass parts of the polyester resin (A). The rubber-modified epoxy resin (b2) can be included in an amount of 20 mass parts or less, 15 mass parts or less, 10 mass parts or less, based on 100 mass parts of the polyester resin (A).

A mass ratio of the rubber-modified epoxy resin (b2) to the bisphenol-type epoxy resin (b1) can be 20% or more, 25% or more, 30% or more. The mass ratio of the rubber-modified epoxy resin (b2) to the bisphenol-type epoxy resin (b1) can be 50% or less, 45% or less, 40% or less.

### (Isocyanate-based crosslinking agent (C))

The isocyanate-based crosslinking agent (C) is not particularly limited, and any of the known crosslinking agents that have been conventionally used, such as those having a polyfunctional isocyanate group, e.g., an isocyanurate, a biuret, an adduct, and a polymeric, can be used. Examples of the isocyanate-based crosslinking agent (C) include a dimer of 2,4-toluylene diisocyanate, triphenylmethane triisocyanate, tris-(p-isocyanatophenyl)thiophosphite, a polyfunctional aromatic isocyanate, a polyfunctional aromatic aliphatic isocyanate, a polyfunctional aliphatic isocyanate, a fatty acid-modified polyfunctional aliphatic isocyanate, a block-type polyisocyanate such as a blocked polyfunctional aliphatic isocyanate, and a polyisocyanate prepolymer.

As the isocyanate-based crosslinking agent (C) being an aromatic based, preferable is diphenylmethane diisocyanate, tolylene diisocyanate, or xylylene diisocyanate. As the isocyanate-based crosslinking agent (C) being an aliphatic based, preferable is a modified product such as hexamethylene diisocyanate or isophorone diisocyanate. The isocyanate-based crosslinking agent (C) preferably includes three or more isocyanate groups in one molecule. Further, as the isocyanate-based crosslinking agent (C), for example, a multimer of the polyisocyanate or an adduct of the multimer with another compound, or a urethane prepolymer obtained by causing a low molecular weight polyol to react with polyamine to have isocyanate located at the molecular terminal is also preferably used. The isocyanate-based crosslinking agent (C) is preferably xylylene diisocyanate. Examples of a commercially available product of the xylylene diisocyanate include trade name "TAKENATE D-110N" manufactured by MITSUI TAKEDA CHEMICALS, INC.

The adhesive layer 10b of the hot melt adhesive sheet 10 of this embodiment can include 3 mass parts or more, 5 mass parts or more, 7 mass parts or more, of the isocyanate-based crosslinking agent (C) based on 100 mass parts of the polyester resin (A). The isocyanate-based crosslinking agent (C) can be included in an amount of 20 mass parts or less, 15 mass parts or less, 12 mass parts or less, based on 100 mass parts of the polyester resin (A).

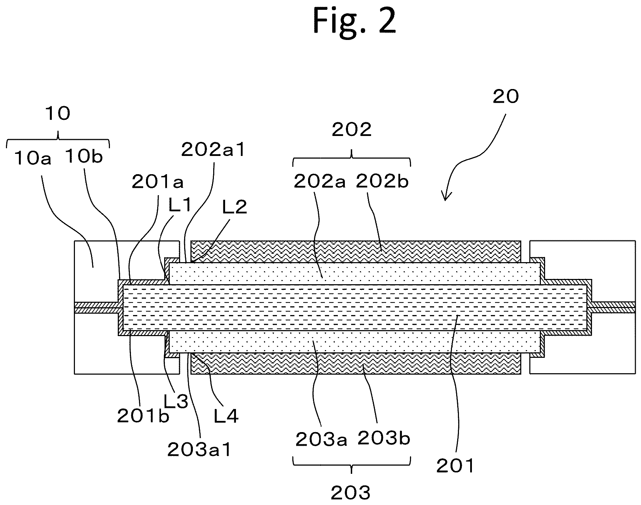

Next, with reference to Fig. 2, a description will be further given by taking, as an example, the case where the membrane electrode assembly (MEA) 20 of the solid polymer fuel cell is an adherend to which the adhesive layer 10b of the hot melt adhesive sheet 10 according to this embodiment is to adhere.

The membrane electrode assembly (MEA) 20 as the adherend is configured to allow hydrogen gas to pass therethrough from a negative electrode side toward a positive electrode side and to cause the hydrogen to react with oxygen supplied to the positive electrode side to generate electricity.

As shown in Fig. 2, the membrane electrode assembly (MEA) 20 includes a solid electrolyte membrane 201 having surfaces opposite to each other, on which a positive electrode 202 and a negative electrode 203 are respectively laminated. The positive electrode 202 includes a positive electrode catalyst layer 202a and a positive electrode gas diffusion layer 202b laminated on the positive electrode catalyst layer 202a. The positive electrode catalyst layer 202a is laminated on the one surface of the solid electrolyte membrane 201. The negative electrode 203 includes a negative electrode catalyst layer 203a and a negative electrode gas diffusion layer 203b laminated on the negative electrode catalyst layer 203a. The negative electrode catalyst layer 203a is laminated on the other surface of the solid electrolyte membrane 201.

As shown in Fig. 2, the positive electrode catalyst layer 202a and the negative electrode catalyst layer 203a are each formed to have a smaller plane dimension than that of the solid electrolyte membrane 201. The positive electrode gas diffusion layer 202b and the negative electrode gas diffusion layer 203b are formed to respectively have smaller plane dimensions than those of the positive electrode catalyst layer 202a and the negative electrode catalyst layer 203a. That is, in the membrane electrode assembly (MEA) 20, each of the plane dimensions of the positive electrode 202 and the negative electrode 203 is smaller than the plane dimension of the solid electrolyte membrane 201. Since the positive electrode 202 has a smaller plane dimension than that of the solid electrolyte membrane 201 as aforementioned, a positive electrode side electrolyte membrane exposed area 201a, which is a portion of the solid electrolyte membrane 201 extending outward from the positive electrode catalyst layer 202a to have an exposed surface, is formed in an outer peripheral portion on the positive electrode side (i.e., on the one surface side) of the membrane electrode assembly (MEA) 20. Further, since the negative electrode 203 has a smaller plane dimension than that of the solid electrolyte membrane 201, a negative electrode side electrolyte membrane exposed area 201b, which is a portion of the solid electrolyte membrane 201 extending outward from the negative electrode catalyst layer 203a to have an exposed surface, is formed in an outer peripheral portion on the negative electrode side (i.e., on the other surface side) of the membrane electrode assembly (MEA) 20. The positive electrode side electrolyte membrane exposed area 201a coincides with the aforementioned first exposed surface, and the negative electrode side electrolyte membrane exposed area 201b coincides with the aforementioned third exposed surface.

A positive electrode side catalyst layer exposed area 202a1, which is a portion of the positive electrode catalyst layer 202a extending outward from the positive electrode gas diffusion layer 202b to have an exposed surface, is formed on the positive electrode side of the membrane electrode assembly (MEA) 20. The positive electrode side catalyst layer exposed area 202a1 is formed inside the positive electrode side electrolyte membrane exposed area 201a and outside the positive electrode gas diffusion layer 202b. In this embodiment, the positive electrode side electrolyte membrane exposed area 201a is formed in an annular shape to extend around the outer peripheral portion of the membrane electrode assembly (MEA) 20. The positive electrode side catalyst layer exposed area 202a1 is formed in an annular shape smaller than that of the positive electrode side electrolyte membrane exposed area 201a. That is, on the positive electrode side of the membrane electrode assembly (MEA) 20, a first boundary line L1 that is a boundary line between the positive electrode side electrolyte membrane exposed area 201a and the positive electrode side catalyst layer exposed area 202a1 is defined, and a second boundary line L2 that is a boundary line between the positive electrode side catalyst layer exposed area 202a1 and the positive electrode gas diffusion layer 202b is defined inside the first boundary line L1. The positive electrode side catalyst layer exposed area 202a1 is the second exposed surface described above.

A negative electrode side catalyst layer exposed area 203a1, which is a portion of the negative electrode catalyst layer 203a extending outward from the negative electrode gas diffusion layer 203b to have an exposed surface, is formed on the negative electrode side of the membrane electrode assembly (MEA) 20. The negative electrode side catalyst layer exposed area 203a1 is formed inside the negative electrode side electrolyte membrane exposed area 201b and outside the negative electrode gas diffusion layer 203b. In this embodiment, the negative electrode side electrolyte membrane exposed area 201b is formed in an annular shape to extend around the outer peripheral portion of the membrane electrode assembly (MEA) 20. The negative electrode side catalyst layer exposed area 203a1 is formed in an annular shape smaller than that of the negative electrode side electrolyte membrane exposed area 201b. That is, on the negative electrode side of the membrane electrode assembly (MEA) 20, a third boundary line L3 that is a boundary line between the negative electrode side electrolyte membrane exposed area 201b and the negative electrode side catalyst layer exposed area 203a1 is defined, and a fourth boundary line L4 that is a boundary line between the negative electrode side catalyst layer exposed area 203a1 and the negative electrode gas diffusion layer 203b is defined inside the third boundary line L3. The negative electrode side catalyst layer exposed area 203a1 is the fourth exposed surface described above.

In the usage shown in Fig. 2, two hot melt adhesive sheets 10, namely a first hot melt adhesive sheet 10 that adheres to the positive electrode side of the membrane electrode assembly (MEA) 20 and a second hot melt adhesive sheet 10 that adheres to the negative electrode side of the membrane electrode assembly (MEA) 20, are used as sub-gasket materials of the solid polymer fuel cell.

The first hot melt adhesive sheet 10 has an annular shape. The first hot melt adhesive sheet 10 has such a shape as to have an outer peripheral edge positioned outside the membrane electrode assembly (MEA) 20 and have an inner peripheral edge positioned within the first positive electrode side catalyst layer exposed area 202a1 and the negative electrode side catalyst layer exposed area 203a1 when the first hot melt adhesive sheet 10 is disposed on the membrane electrode assembly (MEA) 20. That is, a hollow portion of the first hot melt adhesive sheet 10 has a shape slightly larger than the positive electrode gas diffusion layer 202b.

The second hot melt adhesive sheet 10 also has a similar shape to that of the first hot melt adhesive sheet 10.

In this embodiment, the first hot melt adhesive sheet 10 and the second hot melt adhesive sheet 10 are used as the sub-gasket materials by causing the outer peripheral portions of the adhesive layers 10b to directly adhere to each other outside the membrane electrode assembly (MEA) 20.

An inner peripheral portion of the first hot melt adhesive sheet 10 other than the outer peripheral portion adhering to the second hot melt adhesive sheet 10 adheres to the outer peripheral portion of the membrane electrode assembly (MEA) 20, and adheres to an area of the membrane electrode assembly (MEA) 20 extending from the positive electrode side electrolyte membrane exposed area 201a (first exposed surface) through the first boundary line L1 to the positive electrode side catalyst layer exposed area 202a1 (second exposed surface). The second hot melt adhesive sheet 10 also adheres in the same manner as the first hot melt adhesive sheet 10.

The hot melt adhesive sheets 10 are attached (adhere) to the membrane electrode assembly (MEA) 20 as described above to allow positive electrode gas to partially pass through the positive electrode side electrolyte membrane exposed area 201a and negative electrode gas to partially pass through the negative electrode side electrolyte membrane exposed area 201b, thereby being capable of suppressing the performance as the solid polymer fuel cell from being degraded.

The hot melt adhesive sheet 10 according to this embodiment is configured as above. This configuration allows the adhesive layers 10b to sufficiently embed the outer end edge of the solid electrolyte membrane 201 and to be suppressed from having an uneven thickness, as described above, after the first hot melt adhesive sheet 10 is caused to adhere to an area extending from the positive electrode side electrolyte membrane exposed area 201a (first exposed surface) through the first boundary line L1 to reach the positive electrode side catalyst layer exposed area 202a1 (second exposed surface) and the second hot melt adhesive sheet 10 is caused to adhere to an area extending from the negative electrode side electrolyte membrane exposed area 201b (third exposed surface) through the third boundary line L3 to reach the negative electrode side catalyst layer exposed area 203a1 (fourth exposed surface). Specifically, the configuration allows the adhesive layers 10b to sufficiently embed the outer end edge of the solid electrolyte membrane 201 and to be suppressed from having an uneven thickness when, in an atmosphere of 95 °C, the first hot melt adhesive sheet 10 and the second hot melt adhesive sheet 10 are held under a 7.5 MPa load via a metal gasket from an outer side (i.e., side of the base material 10a) of each of the first hot melt adhesive sheet 10 and the second hot melt adhesive sheet 10 for 500 hours.

As has been described, in the solid polymer fuel cell, hydrogen and oxygen react with each other in the membrane electrode assembly (MEA) 20 to generate electricity. When hydrogen and oxygen react as above, the membrane electrode assembly (MEA) 20 reaches a relatively high temperature (for example, 95 °C). When the solid polymer fuel cell is mounted as a power source for an automobile, a central portion of the membrane electrode assembly (MEA) 20 is sufficiently cooled by circulating antifreeze in a radiator through a pipe, but the pipe does not usually extend to an end edge portion of the membrane electrode assembly (MEA) 20. Thus, the end edge portion of the membrane electrode assembly (MEA) 20 remains at a high temperature.

When the antifreeze is being circulated, there are some cases where the antifreeze partially leaks out of the pipe to come into contact with the adhesive layer 10b attached to an end edge side of the solid electrolyte membrane 201. In such a case, the adhesive layer 10b is in contact with polyethylene glycol and water at a high temperature since the antifreeze generally includes polyethylene glycol and water as liquid components.

Further, in the reaction for generating electricity described above, hydrogen ions (H+) undergo mass transfer within the membrane electrode assembly (MEA) 20 to cause the membrane electrode assembly (MEA) 20 to become as strongly acidic as dilute sulfuric acid of about 0.1 to 0.5 M. In such a case, the adhesive layer 10b attached to the end edge side of the solid electrolyte membrane 201 is exposed to strong acidity at a high temperature.

In the hot melt adhesive sheet 10 according to this embodiment, the adhesive layer 10b including the crystalline polyester resin (a1) having the above physical properties is excellent in hot water resistance, acid resistance, and alcohol resistance. In the case where the hot melt adhesive sheet 10 configured as above is used as the sub-gasket material in the solid polymer fuel cell mounted on an automobile, the above configuration enables the hot melt adhesive sheet to maintain adhesiveness to the solid electrolyte membrane 201 for a long period of time (1000 hours) when the adhesive layer 10b is in contact with water or alcohols at a high temperature of 95 °C or is exposed to strong acidity at a high temperature of 95 °C as described above. As will be described later, the solid electrolyte membrane 201 is generally made of a fluororesin such as perfluorocarbon sulfonic acid.

In the membrane electrode assembly (MEA) 20, the positive electrode catalyst layer 202a and the negative electrode catalyst layer 203a are generally made of: a catalyst supporting material such as a carbon material supporting a catalyst; a proton conductive polymer; and a catalyst ink composition including a solvent.

The solid electrolyte membrane 201 of the membrane electrode assembly (MEA) 20 is made of, for example, a fluororesin such as a perfluorocarbon sulfonic acid resin. Examples of the perfluorocarbon sulfonic acid resin include: trade name "Nafion" manufactured by DuPont; trade name "Flemion" manufactured by Asahi Kasei Corporation; and trade name "Aciplex" manufactured by AGC Inc. The perfluorocarbon sulfonic acid resin is, for example, a resin having a polymer structure shown in the following formula (1). With regard to m, n and x in the following formula (1), for example, m ≥ 1, n = 2, and x = 5 to 13.5 hold for the "Nafion", m = 0.1, n = 2 to 5, and x = 1.5 to 14 hold for the "Aciplex", and m = 0.1 and n = 1 to 5 hold for the "Flemion".

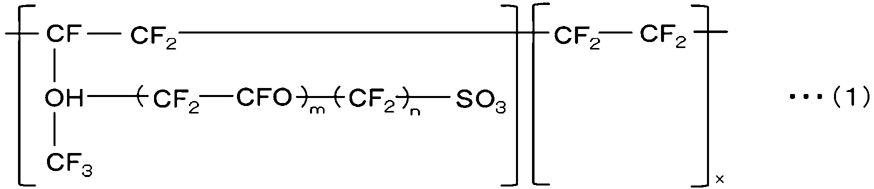

The positive electrode catalyst layer 202a and the negative electrode catalyst layer 203a are layers including catalyst particles. Examples of the catalyst particles included in the positive electrode catalyst layer 202a include platinum. Examples of the catalyst particles included in the negative electrode catalyst layer 203a include a platinum compound. Examples of the platinum compound include an alloy of platinum and at least one metal selected from the group consisting of ruthenium, palladium, nickel, molybdenum, iridium, and iron.

The positive electrode gas diffusion layer 202b and the negative electrode gas diffusion layer 203b are each formed of a porous conductive base material. Examples of the porous conductive base material include carbon paper and carbon cloth.

The hot melt adhesive sheet 10 according to this embodiment can be used also in a redox flow cell. The hot melt adhesive sheet for use in the redox flow cell is used for suppressing the permeation of an electrolyte.

The matters disclosed herein include the following:

(1) A hot melt adhesive sheet including: a base material; and an adhesive layer laminated on at least one surface of the base material, in which the adhesive layer is made of a hot melt adhesive, the hot melt adhesive includes a crosslinked product of an adhesive composition including a crosslinking agent, the adhesive composition includes a polyester resin, an epoxy resin, and an isocyanate-based crosslinking agent, the epoxy resin includes a bisphenol-type epoxy resin and a rubber-modified epoxy resin, and the bisphenol-type epoxy resin has an epoxy equivalent of 450 g/eq or more and 1000 g/eq or less.
   Such a configuration enables the adhesive layer to sufficiently embed the outer end edge of the solid electrolyte membrane and to be suppressed from having an uneven thickness after the adhesive layer is caused to adhere to the solid electrolyte membrane of the solid polymer fuel cell.
(2) The hot melt adhesive sheet according to (1) above, in which the polyester resin includes a crystalline polyester resin having a softening point of 120 °C or more.
   Such a configuration enables the adhesive layer to be further suppressed from being softened in a high temperature (for example 95 °C) environment. The configuration thereby enables the adhesive layer not only to sufficiently embed the outer end edge of the solid electrolyte membrane and to be further suppressed from having an uneven thickness, but also to be excellent in hot water resistance, acid resistance, and alcohol resistance.
(3) The hot melt adhesive sheet according to (1) or (2) above, in which the bisphenol-type epoxy resin includes a bisphenol A type epoxy resin.
   Such a configuration enables the adhesive layer to sufficiently embed the outer end edge of the solid electrolyte membrane and to be further suppressed from having an uneven thickness after the adhesive layer is caused to adhere to the solid electrolyte membrane of the solid polymer fuel cell.
(4) The hot melt adhesive sheet according to any of (1) to (3) above, in which the rubber-modified epoxy resin is an NBR-modified epoxy resin.
   Such a configuration enables the adhesive layer to sufficiently embed the outer end edge of the solid electrolyte membrane and to be further suppressed from having an uneven thickness after the adhesive layer is caused to adhere to the solid electrolyte membrane of the solid polymer fuel cell.
(5) The hot melt adhesive sheet according to any of (1) to (4) above, the hot melt adhesive sheet being configured to adhere to a solid electrolyte membrane of a solid polymer fuel cell for use.

Such a configuration enables the adhesive layer to sufficiently embed the outer end edge of the solid electrolyte membrane and to be further suppressed from having an uneven thickness after the adhesive layer is caused to adhere to the solid electrolyte membrane of the solid polymer fuel cell.

The hot melt adhesive sheet according to the present invention is not limited to the above embodiment. Further, the hot melt adhesive sheet according to the present invention is not limited by the abovementioned operational effects, either. Various modifications can be made to the hot melt adhesive sheet according to the present invention without departing from the gist of the present invention.

### EXAMPLES

### [Dissolution example of bisphenol-type epoxy resin (b1)]

### <Dissolution example of bisphenol-type epoxy resin (b1): B1>

A reactor vessel equipped with a stirrer, a reflux condenser, a thermometer, a nitrogen inlet tube, and a manhole was prepared. While the inside of the reactor vessel was replaced with nitrogen, 400.0 g of a bisphenol A type epoxy resin (epoxy equivalent: 450 to 500 g/eq, jER1001: manufactured by Mitsubishi Chemical Corporation, hereinafter referred to as epoxy resin B1) was charged in the vessel, and 600.0 g of methyl ethyl ketone (MEK) was charged as a solvent while stirring, followed by raising the temperature in the vessel to 60 °C to completely dissolve the epoxy resin B1 in the methyl ethyl ketone. Thereby, a dissolved product BB1 (hereinafter referred to as epoxy resin solution BB1) of the epoxy resin B1 was obtained. The resulting epoxy resin solution BB1 had a solid content of 40 mass %.

### <Dissolution example of bisphenol-type epoxy resin (b1): B2>

A dissolved product BB2 (hereinafter referred to as epoxy resin solution BB2) of the epoxy resin B2 was obtained in the same manner as in the above dissolution example B1, except that a bisphenol A type epoxy resin (epoxy equivalent: 670 to 770 g/eq, jER 1003: manufactured by Mitsubishi Chemical Corporation, hereinafter referred to as epoxy resin B2) was used in substitution for the epoxy resin B1. The resulting epoxy resin solution BB2 had a solid content of 40 mass %.

### <Dissolution example of bisphenol-type epoxy resin (b1): B3>

A dissolved product BB3 (hereinafter referred to as epoxy resin solution BB3) of the epoxy resin B3 was obtained in the same manner as in the above dissolution example B1, except that a bisphenol A type epoxy resin (epoxy equivalent: 875 to 975 g/eq, jER 1004: manufactured by Mitsubishi Chemical Corporation, hereinafter referred to as epoxy resin B3) was used in substitution for the epoxy resin B1. The resulting epoxy resin solution BB3 had a solid content of 40 mass %.

### <Dissolution example of bisphenol-type epoxy resin (b1): B4>

A dissolved product BB4 (hereinafter referred to as epoxy resin solution BB4) of the epoxy resin B4 was obtained in the same manner as in the above dissolution example B1, except that a bisphenol A type epoxy resin (epoxy equivalent: 1,750 to 2,200 g/eq, jER 1007: manufactured by Mitsubishi Chemical Corporation, hereinafter referred to as epoxy resin B4) was used in substitution for the epoxy resin B1.

### <Dissolution example of bisphenol-type epoxy resin (b1): B5>

A dissolved product BB5 (hereinafter referred to as epoxy resin solution BB5) of the epoxy resin B5 was obtained in the same manner as in the above dissolution example B1, except that a bisphenol A type phenoxy resin (epoxy equivalent: 7,500 to 8,500 g/eq, jER 1256: manufactured by Mitsubishi Chemical Corporation, hereinafter referred to as epoxy resin B5) was used in substitution for the epoxy resin B1.

### <Dissolution example of bisphenol-type epoxy resin (b1): B6>

A dissolved product BB6 (hereinafter referred to as epoxy resin solution BB6) of the epoxy resin B6 was obtained in the same manner as in the above dissolution example B1, except that a bisphenol A novolac-type epoxy resin (epoxy equivalent: 200 to 220 g/eq, jER 157S70: manufactured by Mitsubishi Chemical Corporation, hereinafter referred to as epoxy resin B6) was used in substitution for the epoxy resin B1.

### (Example 1)

A first urethane-modified polyester resin (trade name "VYLON (registered trademark) UR-3210" manufactured by TOYOBO Co., Ltd.) as the polyester resin (A), the rubber-modified epoxy resin (b2) (trade name "ADEKA RESIN EPR-1415-1" manufactured by ADEKA CORPORATION), and the isocyanate-based crosslinking agent (C) (trade name "TAKENATE D-110N" manufactured by MITSUI TAKEDA CHEMICALS, INC.) were added to the epoxy resin solution BB1 in mixing proportions shown in Table 1A below to obtain a hot melt adhesive layer composition according to Example 1. The first urethane-modified polyester resin ("UR-3210") was added to the epoxy resin solution BB1 as follows: That is, a solution (hereinafter referred to as first urethane-modified polyester resin solution) was prepared by dissolving 25 mass % of the first urethane-modified polyester resin in a mixed solvent obtained by mixing toluene and methyl ethyl ketone at a mass ratio between toluene and methyl ethyl ketone of 8:2, and thereafter the first urethane-modified polyester resin solution was added to the epoxy resin solution BB1.

### (Example 2)

A hot melt adhesive layer composition according to Example 2 was obtained in the same manner as in Example 1, except that the epoxy resin solution BB2 was used in substitution for the epoxy resin solution BB1.

### (Example 3)

A hot melt adhesive layer composition according to Example 3 was obtained in the same manner as in Example 1, except that the epoxy resin solution BB3 was used in substitution for the epoxy resin solution BB1.

### (Example 4)

A hot melt adhesive layer composition according to Example 4 was obtained in the same manner as in Example 1, except that a second urethane-modified polyester resin (trade name "VYLON (registered trademark) UR-4410" manufactured by TOYOBO Co., Ltd.) was used as the polyester resin (A) in substitution for the first urethane-modified polyester resin. The second urethane-modified polyester resin was added in the form of a second urethane-modified polyester resin solution to the epoxy resin solution BB1 in the same manner as in Example 1.

### (Example 5)

A hot melt adhesive layer composition according to Example 5 was obtained in the same manner as in Example 1, except that the epoxy resin solution BB2 was used in substitution for the epoxy resin solution BB1 and the second urethane-modified polyester resin was used in substitution for the first urethane-modified polyester resin. The second urethane-modified polyester resin was added to the epoxy resin solution BB2 in the same manner as in Example 4.

### (Example 6)

A hot melt adhesive layer composition according to Example 6 was obtained in the same manner as in Example 1, except that the epoxy resin solution BB3 was used in substitution for the epoxy resin solution BB1 and the second urethane-modified polyester resin was used in substitution for the first urethane-modified polyester resin. The second urethane-modified polyester resin was added to the epoxy resin solution BB3 in the same manner as in Example 4.

### (Example 7)

A hot melt adhesive layer composition according to Example 7 was obtained in the same manner as in Example 1, except that a first crystalline polyester resin (trade name "GM-920" manufactured by TOYOBO Co., Ltd.) was used in substitution for the first urethane-modified polyester resin. The first crystalline polyester resin was added in the form of a first crystalline polyester resin solution to the epoxy resin solution BB1 in the same manner as in Example 1.

### (Example 8)

A hot melt adhesive layer composition according to Example 8 was obtained in the same manner as in Example 1, except that the epoxy resin solution BB2 was used in substitution for the epoxy resin solution BB1 and the first crystalline polyester resin was used in substitution for the first urethane-modified polyester resin. The first crystalline polyester resin was added to the epoxy resin solution BB2 in the same manner as in Example 7.

### (Example 9)

A hot melt adhesive layer composition according to Example 9 was obtained in the same manner as in Example 1, except that the epoxy resin solution BB3 was used in substitution for the epoxy resin solution BB1 and the first crystalline polyester resin was used in substitution for the first urethane-modified polyester resin. The first crystalline polyester resin was added to the epoxy resin solution BB3 in the same manner as in Example 7.

### (Example 10)

A hot melt adhesive layer composition according to Example 10 was obtained in the same manner as in Example 1, except that a second crystalline polyester resin (trade name "GM-913" manufactured by TOYOBO Co., Ltd.) was used in substitution for the first urethane-modified polyester resin. The second crystalline polyester resin was added in the form of a second crystalline polyester resin solution to the epoxy resin solution BB1 in the same manner as in Example 1.

### (Example 11)

A hot melt adhesive layer composition according to Example 11 was obtained in the same manner as in Example 1, except that the epoxy resin solution BB2 was used in substitution for the epoxy resin solution BB1 and the second crystalline polyester resin was used in substitution for the first urethane-modified polyester resin. The second crystalline polyester resin was added to the epoxy resin solution BB2 in the same manner as in Example 10.

### (Example 12)

A hot melt adhesive layer composition according to Example 12 was obtained in the same manner as in Example 1, except that the epoxy resin solution BB3 was used in substitution for the epoxy resin solution BB1 and the second crystalline polyester resin was used in substitution for the first urethane-modified polyester resin. The second crystalline polyester resin was added to the epoxy resin solution BB3 in the same manner as in Example 10.

### (Example 13)

A hot melt adhesive layer composition according to Example 13 was obtained in the same manner as in Example 1, except that a third crystalline polyester resin (trade name "UE-9400" manufactured by UNITIKA LTD.) was used in substitution for the first urethane-modified polyester resin. The third crystalline polyester resin was added in the form of a third crystalline polyester resin solution to the epoxy resin solution BB1 in the same manner as in Example 1.

### (Example 14)

A hot melt adhesive layer composition according to Example 14 was obtained in the same manner as in Example 1, except that the epoxy resin solution BB2 was used in substitution for the epoxy resin solution BB1 and the third crystalline polyester resin was used in substitution for the first urethane-modified polyester resin. The third crystalline polyester resin was added to the epoxy resin solution BB2 in the same manner as in Example 13.

### (Example 15)

A hot melt adhesive layer composition according to Example 15 was obtained in the same manner as in Example 1, except that the epoxy resin solution BB3 was used in substitution for the epoxy resin solution BB1 and the third crystalline polyester resin was used in substitution for the first urethane-modified polyester resin. The third crystalline polyester resin was added to the epoxy resin solution BB3 in the same manner as in Example 13.

### (Example 16)

A hot melt adhesive layer composition according to Example 16 was obtained in the same manner as in Example 1, except that a fourth crystalline polyester resin (trade name "UE-3400" manufactured by UNITIKA LTD.) was used in substitution for the first urethane-modified polyester resin. The fourth crystalline polyester resin was added in the form of a fourth crystalline polyester resin solution to the epoxy resin solution BB1 in the same manner as in Example 1.

### (Example 17)

A hot melt adhesive layer composition according to Example 17 was obtained in the same manner as in Example 1, except that the epoxy resin solution BB2 was used in substitution for the epoxy resin solution BB1 and the fourth crystalline polyester resin was used in substitution for the first urethane-modified polyester resin. The fourth crystalline polyester resin was added to the epoxy resin solution BB2 in the same manner as in Example 16.

### (Example 18)

A hot melt adhesive layer composition according to Example 18 was obtained in the same manner as in Example 1, except that the epoxy resin solution BB3 was used in substitution for the epoxy resin solution BB1 and the fourth crystalline polyester resin was used in substitution for the first urethane-modified polyester resin. The fourth crystalline polyester resin was added to the epoxy resin solution BB3 in the same manner as in Example 16.

### (Example 19)

A hot melt adhesive layer composition according to Example 19 was obtained in the same manner as in Example 1, except that a fifth crystalline polyester resin (trade name "UE-3410" manufactured by UNITIKA LTD.) was used in substitution for the first urethane-modified polyester resin. The fifth crystalline polyester resin was added in the form of a fifth crystalline polyester resin solution to the epoxy resin solution BB1 in the same manner as in Example 1.

### (Example 20)

A hot melt adhesive layer composition according to Example 20 was obtained in the same manner as in Example 1, except that the epoxy resin solution BB2 was used in substitution for the epoxy resin solution BB1 and the fifth crystalline polyester resin was used in substitution for the first urethane-modified polyester resin. The fifth crystalline polyester resin was added to the epoxy resin solution BB2 in the same manner as in Example 19.

### (Example 21)

A hot melt adhesive layer composition according to Example 21 was obtained in the same manner as in Example 1, except that the epoxy resin solution BB3 was used in substitution for the epoxy resin solution BB1 and the fifth crystalline polyester resin was used in substitution for the first urethane-modified polyester resin. The fifth crystalline polyester resin was added to the epoxy resin solution BB3 in the same manner as in Example 19.

**Table 1A**

| | | | Ex. 1 | Ex. 2 | Ex. 3 | Ex. 4 | Ex. 5 | Ex. 6 | Ex. 7 | Ex. 8 | Ex.9 |
|---|---|---|---|---|---|---|---|---|---|---|---|
| Polyester resin (A) | 1st urehane-modified polyeser resin | UR-3210 | 100 | 100 | 100 | - | - | - | - | - | - |
| | 2nd urehane-modiled polyeser resin | UR-4410 | - | - | - | 100 | 100 | 100 | - | - | - |
| | 1st crystalline polyester resin | GM-920 | - | - | - | - | - | - | 100 | 100 | 100 |
| | 2nd crystalline polyester resin | GM-913 | - | - | - | - | - | - | - | - | - |
| | 3rd crystalline polyester resin | UE-9400 | - | - | - | - | - | - | - | - | - |
| | 4th crystalline polyester resin | UE-3400 | - | - | - | - | - | - | - | - | - |
| | 5th crystalline polyester resin | UE-3410 | - | - | - | - | - | - | - | - | - |
| Epoxy resin (B) | Epoxy resin B1 | JER1001 | 25 | - | - | 25 | - | - | 25 | - | - |
| | Epoxy resin B2 | JER1003 | - | 25 | - | - | 25 | - | - | 25 | - |
| | Epoxy resin B3 | JER1004 | - | - | 25 | - | - | 25 | - | - | 25 |
| | Epoxy resin B4 | JER1007 | - | - | - | - | - | - | - | - | - |
| | Epoxy resin B5 | JER1256 | - | - | - | - | - | - | - | - | - |
| | Epoxy resin B6 | JER157S70 | - | - | - | - | - | - | - | - | - |
| | Rubber-modified epoxy resin | EPR-1415-1 | 9 | 9 | 9 | 9 | 9 | 9 | 9 | 9 | 9 |
| Isocyanate-based crosslinking agent (C) | | TAKENATE D110N | 10 | 10 | 10 | 10 | 10 | 10 | 10 | 10 | 10 |

| | | | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|---|
| Polyester resin (A) | 1st urehane-modified polyeser resin | UR-3210 | - | - | - | - | - | - | - | - | - |
| | 2nd urehane-modiled polyeser resin | UR-4410 | - | - | - | - | - | - | - | - | - |
| | 1st crystalline polyester resin | GM-920 | - | - | - | - | - | - | - | - | - |
| | 2nd crystalline polyester resin | GM-913 | 100 | 100 | 100 | - | - | - | - | - | - |
| | 3rd crystalline polyester resin | UE-9400 | - | - | - | 100 | 100 | 100 | - | - | - |
| | 4th crystalline polyester resin | UE-3400 | - | - | - | - | - | - | 100 | 100 | 100 |
| | 5th crystalline polyester resin | UE-3410 | - | - | - | - | - | - | - | - | - |
| Epoxy resin (B) | Epoxy resin B1 | JER1001 | 25 | - | - | 25 | - | - | 25 | - | - |
| | Epoxy resin B2 | JER1003 | - | 25 | - | - | 25 | - | - | 25 | |
| | Epoxy resin B3 | JER1004 | | | 25 | - | - | 25 | - | - | 25 |
| | Epoxy resin B4 | JER1007 | - | - | - | - | - | - | - | - | - |
| | Epoxy resin B5 | JER1256 | - | - | - | - | - | - | - | - | - |
| | Epoxy resin B6 | JER157S70 | - | - | - | - | - | - | - | - | - |
| | Rubber-modified epoxy resin | EPR-1415-1 | 9 | 9 | 9 | 9 | 9 | 9 | 9 | 9 | 9 |
| Isocyanate-based crosslinking agent (C) | | TAKENATE D110N | 10 | 10 | 10 | 10 | 10 | 10 | 10 | 10 | 10 |

| | | | Ex. 19 | Ex. 20 | Ex. 21 | | | | | | |
|---|---|---|---|---|---|---|---|---|---|---|---|
| Polyester resin (A) | 1st urehane-modified polyeser resin | UR-3210 | - | - | - | | | | | | |
| | 2nd urehane-modiled polyeser resin | UR-4410 | - | - | - | | | | | | |
| | 1st crystalline polyester resin | GM-920 | - | - | - | | | | | | |
| | 2nd crystalline polyester resin | GM-913 | - | - | - | | | | | | |
| | 3rd crystalline polyester resin | UE-9400 | - | - | - | | | | | | |
| | 4th crystalline polyester resin | UE-3400 | - | - | - | | | | | | |
| | 5th crystalline polyester resin | UE-3410 | 100 | 100 | 100 | | | | | | |
| Epoxy resin (B) | Epoxy resin B1 | JER1001 | 25 | - | - | | | | | | |
| | Epoxy resin B2 | JER1003 | - | 25 | - | | | | | | |
| | Epoxy resin B3 | JER1004 | - | - | 25 | | | | | | |
| | Epoxy resin B4 | JER1007 | - | - | - | | | | | | |
| | Epoxy resin B5 | JER1256 | - | - | - | | | | | | |
| | Epoxy resin B6 | JER157S70 | - | - | - | | | | | | |
| | Rubber-modified epoxy resin | EPR-1415-1 | 9 | 9 | 9 | | | | | | |
| Isocyanate-based crosslinking agent (C) | | TAKENATE D110N | 10 | 10 | 10 | | | | | | |

### (Comparative Example 1)

A hot melt adhesive layer composition according to Comparative Example 1 was obtained in the same manner as in Example 1, except that no rubber-modified epoxy resin (b2) was added.

### (Comparative Example 2)

A hot melt adhesive layer composition according to Comparative Example 2 was obtained in the same manner as in Example 2, except that no rubber-modified epoxy resin (b2) was added.

### (Comparative Example 3)

A hot melt adhesive layer composition according to Comparative Example 3 was obtained in the same manner as in Example 3, except that no rubber-modified epoxy resin (b2) was added.

### (Comparative Example 4)

A hot melt adhesive layer composition according to Comparative Example 4 was obtained in the same manner as in Example 4, except that no rubber-modified epoxy resin (b2) was added.

### (Comparative Example 5)

A hot melt adhesive layer composition according to Comparative Example 5 was obtained in the same manner as in Example 5, except that no rubber-modified epoxy resin (b2) was added.

### (Comparative Example 6)

A hot melt adhesive layer composition according to Comparative Example 6 was obtained in the same manner as in Example 6, except that no rubber-modified epoxy resin (b2) was added.

### (Comparative Example 7)

A hot melt adhesive layer composition according to Comparative Example 7 was obtained in the same manner as in Example 7, except that no rubber-modified epoxy resin (b2) was added.

### (Comparative Example 8)

A hot melt adhesive layer composition according to Comparative Example 8 was obtained in the same manner as in Example 8, except that no rubber-modified epoxy resin (b2) was added.

### (Comparative Example 9)

A hot melt adhesive layer composition according to Comparative Example 9 was obtained in the same manner as in Example 9, except that no rubber-modified epoxy resin (b2) was added.

### (Comparative Example 10)

A hot melt adhesive layer composition according to Comparative Example 10 was obtained in the same manner as in Example 10, except that no rubber-modified epoxy resin (b2) was added.

### (Comparative Example 11)

A hot melt adhesive layer composition according to Comparative Example 11 was obtained in the same manner as in Example 11, except that no rubber-modified epoxy resin (b2) was added.

### (Comparative Example 12)

A hot melt adhesive layer composition according to Comparative Example 12 was obtained in the same manner as in Example 12, except that no rubber-modified epoxy resin (b2) was added.

### (Comparative Example 13)

A hot melt adhesive layer composition according to Comparative Example 13 was obtained in the same manner as in Example 13, except that no rubber-modified epoxy resin (b2) was added.

### (Comparative Example 14)

A hot melt adhesive layer composition according to Comparative Example 14 was obtained in the same manner as in Example 14, except that no rubber-modified epoxy resin (b2) was added.

### (Comparative Example 15)

A hot melt adhesive layer composition according to Comparative Example 15 was obtained in the same manner as in Example 15, except that no rubber-modified epoxy resin (b2) was added.

### (Comparative Example 16)

A hot melt adhesive layer composition according to Comparative Example 16 was obtained in the same manner as in Example 16, except that no rubber-modified epoxy resin (b2) was added.

### (Comparative Example 17)

A hot melt adhesive layer composition according to Comparative Example 17 was obtained in the same manner as in Example 17, except that no rubber-modified epoxy resin (b2) was added.

### (Comparative Example 18)

A hot melt adhesive layer composition according to Comparative Example 18 was obtained in the same manner as in Example 18, except that no rubber-modified epoxy resin (b2) was added.

### (Comparative Example 19)

A hot melt adhesive layer composition according to Comparative Example 19 was obtained in the same manner as in Example 19, except that no rubber-modified epoxy resin (b2) was added.

### (Comparative Example 20)

A hot melt adhesive layer composition according to Comparative Example 20 was obtained in the same manner as in Example 20, except that no rubber-modified epoxy resin (b2) was added.

### (Comparative Example 21)

A hot melt adhesive layer composition according to Comparative Example 21 was obtained in the same manner as in Example 21, except that no rubber-modified epoxy resin (b2) was added.

The mixing composition of the hot melt adhesive layer composition according to each of Comparative Examples 1 to 21 is shown in Table 1B below.

**Table 1B**

| | | | C. Ex. 1 | C. Ex. 2 | C. Ex. 3 | C. Ex. 4 | C. Ex. 5 | C. Ex. 6 | C. Ex. 7 | C. Ex. 8 | C. Ex. 9 |
|---|---|---|---|---|---|---|---|---|---|---|---|
| Polyester resin (A) | 1st urethane-modified polyester resin | UR-3210 | 100 | 100 | 100 | - | - | - | - | - | - |
| | 2nd urethane-modified polyester resin | UR-4410 | - | - | - | 100 | 100 | 100 | - | - | - |
| | 1st crystalline polyester resin | GM-920 | - | - | - | - | - | - | 100 | 100 | 100 |
| | 2nd crystalline polyester resin | GM-913 | - | - | - | - | - | - | - | - | - |
| | 3rd crystalline polyester resin | UE-9400 | - | - | - | - | - | - | - | - | - |
| | 4th crystalline polyester resin | UE-3400 | - | - | - | - | - | - | - | - | - |
| | 5th crystalline polyester resin | UE-3410 | - | - | - | - | - | - | - | - | - |
| Epoxyresin (B) | Epoxy resin B1 | JER1001 | 25 | - | - | 25 | - | - | 25 | - | - |
| | Epoxy resin B2 | JER1003 | - | 25 | - | - | 25 | - | | 25 | - |
| | Epoxy resin B3 | JER1004 | - | - | 25 | - | - | 25 | | - | 25 |
| | Epoxy resin B4 | JER1007 | - | - | - | - | - | - | | - | - |
| | Epoxy resin B5 | JER1256 | - | - | - | - | - | - | | - | - |
| | Epoxy resin B6 | JER157S70 | - | - | - | - | - | - | | - | - |
| | Rubber-modified epoxy resin | EPR-1415-1 | - | - | - | - | - | - | | - | - |
| Isocyanate-based crosslinking agent (C) | | TAKENATE D110N | 10 | 10 | 10 | 10 | 10 | 10 | 10 | 10 | 10 |

| | | | C. Ex. 10 | C. Ex. 11 | C. Ex. 12 | C. Ex. 13 | C. Ex. 14 | C. Ex. 15 | C. Ex. 16 | C. Ex. 17 | C. Ex. 18 |
|---|---|---|---|---|---|---|---|---|---|---|---|
| Polyester resin (A) | 1st urehane-modified polyester resin | UR-3210 | - | - | - | - | - | - | - | - | - |
| | 2nd urethane-modified polyester resin | UR-4410 | - | - | - | - | - | - | - | - | - |
| | 1st crystalline polyester resin | GM-920 | - | - | - | - | - | - | - | - | - |
| | 2nd crystalline polyester resin | GM-913 | 100 | 100 | 100 | - | - | - | - | - | - |
| | 3rd crystalline polyester resin | UE-9400 | - | - | - | 100 | 100 | 100 | - | - | - |
| | 4th crystalline polyester resin | UE-3400 | - | - | - | - | - | - | 100 | 100 | 100 |
| | 5th crystalline polyester resin | UE-3410 | - | - | - | - | - | - | - | - | - |
| Epoxyresin (B) | Epoxy resin B1 | JER1001 | 25 | - | - | 25 | - | - | 25 | - | - |
| | Epoxy resin B2 | JER1003 | - | 25 | - | - | 25 | - | - | 25 | - |
| | Epoxy resin B3 | JER1004 | | | 25 | - | - | 25 | - | - | 25 |
| | Epoxy resin B4 | JER1007 | - | - | - | - | - | - | - | - | - |
| | Epoxy resin B5 | JER1256 | - | - | - | - | - | - | - | - | - |
| | Epoxy resin B6 | JER157S70 | - | - | - | - | - | - | - | - | - |
| | Rubber-modified epoxy resin | EPR-1415-1 | - | - | - | - | - | - | - | - | - |
| Isocyanate-based crosslinking agent (C) | | TAKENATE D110N | 10 | 10 | 10 | 10 | 10 | 10 | 10 | 10 | 10 |

| | | | C. Ex. 19 | C. Ex. 20 | C. Ex. 21 | | | | | | |
|---|---|---|---|---|---|---|---|---|---|---|---|
| Polyester resin (A) | 1st urethane-modified polyester resin | UR-3210 | - | - | - | | | | | | |
| | 2nd urethane-modified polyester resin | UR-4410 | - | - | - | | | | | | |
| | 1st crystalline polyester resin | GM-920 | - | - | - | | | | | | |
| | 2nd crystalline polyester resin | GM-913 | - | - | - | | | | | | |
| | 3rd crystalline polyester resin | UE-9400 | - | - | - | | | | | | |
| | 4th crystalline polyester resin | UE-3400 | - | - | - | | | | | | |
| | 5th crystalline polyester resin | UE-3410 | 100 | 100 | 100 | | | | | | |
| Epoxyresin (B) | Epoxy resin B1 | JER1001 | 25 | - | - | | | | | | |
| | Epoxy resin B2 | JER1003 | - | 25 | - | | | | | | |
| | Epoxy resin B3 | JER1004 | - | - | 25 | | | | | | |
| | Epoxy resin B4 | JER1007 | - | - | - | | | | | | |
| | Epoxy resin B5 | JER1256 | - | - | - | | | | | | |
| | Epoxy resin B6 | JER157S70 | - | - | - | | | | | | |
| | Rubber-modified epoxy resin | EPR-1415-1 | - | - | - | | | | | | |
| Isocyanate-based crosslinking agent (C) | | TAKENATE D110N | 10 | 10 | 10 | | | | | | |

### (Comparative Example 22)

A hot melt adhesive layer composition according to Comparative Example 22 was obtained in the same manner as in Example 1, except that the epoxy resin solution BB4 was used in substitution for the epoxy resin solution BB1.

### (Comparative Example 23)

A hot melt adhesive layer composition according to Comparative Example 23 was obtained in the same manner as in Example 1, except that the epoxy resin solution BB5 was used in substitution for the epoxy resin solution BB1.

### (Comparative Example 24)

A hot melt adhesive layer composition according to Comparative Example 24 was obtained in the same manner as in Example 1, except that the epoxy resin solution BB6 was used in substitution for the epoxy resin solution BB1.

### (Comparative Example 25)

A hot melt adhesive layer composition according to Comparative Example 25 was obtained in the same manner as in Example 1, except that the epoxy resin solution BB4 was used in substitution for the epoxy resin solution BB1 and the second urethane-modified polyester resin was used in substitution for the first urethane-modified polyester resin.

### (Comparative Example 26)

A hot melt adhesive layer composition according to Comparative Example 26 was obtained in the same manner as in Example 1, except that the epoxy resin solution BB5 was used in substitution for the epoxy resin solution BB1 and the second urethane-modified polyester resin was used in substitution for the first urethane-modified polyester resin.

### (Comparative Example 27)

A hot melt adhesive layer composition according to Comparative Example 27 was obtained in the same manner as in Example 1, except that the epoxy resin solution BB6 was used in substitution for the epoxy resin solution BB1 and the second urethane-modified polyester resin was used in substitution for the first urethane-modified polyester resin.

### (Comparative Example 28)

A hot melt adhesive layer composition according to Comparative Example 28 was obtained in the same manner as in Example 1, except that the epoxy resin solution BB4 was used in substitution for the epoxy resin solution BB1 and the first crystalline polyester resin was used in substitution for the first urethane-modified polyester resin.

### (Comparative Example 29)

A hot melt adhesive layer composition according to Comparative Example 29 was obtained in the same manner as in Example 1, except that the epoxy resin solution BB5 was used in substitution for the epoxy resin solution BB1 and the first crystalline polyester resin was used in substitution for the first urethane-modified polyester resin.

### (Comparative Example 30)

A hot melt adhesive layer composition according to Comparative Example 30 was obtained in the same manner as in Example 1, except that the epoxy resin solution BB6 was used in substitution for the epoxy resin solution BB1 and the first crystalline polyester resin was used in substitution for the first urethane-modified polyester resin.

### (Comparative Example 31)

A hot melt adhesive layer composition according to Comparative Example 31 was obtained in the same manner as in Example 1, except that the epoxy resin solution BB4 was used in substitution for the epoxy resin solution BB1 and the second crystalline polyester resin was used in substitution for the first urethane-modified polyester resin.

### (Comparative Example 32)

A hot melt adhesive layer composition according to Comparative Example 32 was obtained in the same manner as in Example 1, except that the epoxy resin solution BB5 was used in substitution for the epoxy resin solution BB1 and the second crystalline polyester resin was used in substitution for the first urethane-modified polyester resin.

### (Comparative Example 33)

A hot melt adhesive layer composition according to Comparative Example 33 was obtained in the same manner as in Example 1, except that the epoxy resin solution BB6 was used in substitution for the epoxy resin solution BB1 and the second crystalline polyester resin was used in substitution for the first urethane-modified polyester resin.

### (Comparative Example 34)

A hot melt adhesive layer composition according to Comparative Example 34 was obtained in the same manner as in Example 1, except that the epoxy resin solution BB4 was used in substitution for the epoxy resin solution BB1 and the third crystalline polyester resin was used in substitution for the first urethane-modified polyester resin.

### (Comparative Example 35)

A hot melt adhesive layer composition according to Comparative Example 35 was obtained in the same manner as in Example 1, except that the epoxy resin solution BB5 was used in substitution for the epoxy resin solution BB1 and the third crystalline polyester resin was used in substitution for the first urethane-modified polyester resin.

### (Comparative Example 36)

A hot melt adhesive layer composition according to Comparative Example 36 was obtained in the same manner as in Example 1, except that the epoxy resin solution BB6 was used in substitution for the epoxy resin solution BB1 and the third crystalline polyester resin was used in substitution for the first urethane-modified polyester resin.

### (Comparative Example 37)

A hot melt adhesive layer composition according to Comparative Example 37 was obtained in the same manner as in Example 1, except that the epoxy resin solution BB4 was used in substitution for the epoxy resin solution BB1 and the fourth crystalline polyester resin was used in substitution for the first urethane-modified polyester resin.

### (Comparative Example 38)

A hot melt adhesive layer composition according to Comparative Example 38 was obtained in the same manner as in Example 1, except that the epoxy resin solution BB5 was used in substitution for the epoxy resin solution BB1 and the fourth crystalline polyester resin was used in substitution for the first urethane-modified polyester resin.

### (Comparative Example 39)

A hot melt adhesive layer composition according to Comparative Example 39 was obtained in the same manner as in Example 1, except that the epoxy resin solution BB6 was used in substitution for the epoxy resin solution BB1 and the fourth crystalline polyester resin was used in substitution for the first urethane-modified polyester resin.

### (Comparative Example 40)

A hot melt adhesive layer composition according to Comparative Example 40 was obtained in the same manner as in Example 1, except that the epoxy resin solution BB4 was used in substitution for the epoxy resin solution BB1 and the fifth crystalline polyester resin was used in substitution for the first urethane-modified polyester resin.

### (Comparative Example 41)

A hot melt adhesive layer composition according to Comparative Example 41 was obtained in the same manner as in Example 1, except that the epoxy resin solution BB5 was used in substitution for the epoxy resin solution BB1 and the fifth crystalline polyester resin was used in substitution for the first urethane-modified polyester resin.

### (Comparative Example 42)

A hot melt adhesive layer composition according to Comparative Example 42 was obtained in the same manner as in Example 1, except that the epoxy resin solution BB6 was used in substitution for the epoxy resin solution BB1 and the fifth crystalline polyester resin was used in substitution for the first urethane-modified polyester resin.

The mixing composition of the hot melt adhesive layer composition according to each of Comparative Examples 22 to 42 is shown in Table 1C below.

**Table 1C**

| | | | C. Ex. 22 | C. Ex. 23 | C. Ex. 24 | C. Ex. 25 | C. Ex. 26 | C. Ex. 27 | C. Ex. 28 | C. Ex. 29 | C. Ex. 30 |
|---|---|---|---|---|---|---|---|---|---|---|---|
| Polyester resin (A) | 1st urethane-modified polyeser resin | UR-3210 | 100 | 100 | 100 | - | - | - | - | - | - |
| | 2nd urehane-modified polyester resin | UR-4410 | - | - | - | 100 | 100 | 100 | - | - | - |
| | 1st crystalline polyester resin | GM-920 | - | - | - | - | - | - | 100 | 100 | 100 |
| | 2nd crystalline polyester resin | GM-913 | - | - | - | - | - | - | - | - | - |
| | 3rd crystalline polyester resin | UE-9400 | - | - | - | - | - | - | - | - | - |
| | 4th crystalline polyester resin | UE-3400 | - | - | - | - | - | - | - | - | - |
| | 5th crystalline polyester resin | UE-3410 | - | - | - | - | - | - | - | - | - |
| Epoxy resin (B) | Epoxy resin B1 | JER1001 | - | - | - | - | - | - | - | - | - |
| | Epoxy resin B2 | JER1003 | - | - | - | - | - | - | - | - | - |
| | Epoxy resin B3 | JER1004 | - | - | - | - | - | - | - | - | - |
| | Epoxy resin B4 | JER1007 | 25 | - | - | 25 | - | - | 25 | - | - |
| | Epoxy resin B5 | JER1256 | - | 25 | - | - | 25 | - | - | 25 | - |
| | Epoxy resin B6 | JER157S70 | - | - | 25 | - | - | 25 | - | - | 25 |
| | Rubber-modified epoxy resin | EPR-1415-1 | 9 | 9 | 9 | 9 | 9 | 9 | 9 | 9 | 9 |
| Isocyanate-based crosslinking agent (C) | | TAKENATED110N | 10 | 10 | 10 | 10 | 10 | 10 | 10 | 10 | 10 |

| | | | C. Ex. 31 | C. Ex. 32 | C. Ex. 33 | C. Ex. 34 | C. Ex. 35 | C. Ex. 36 | C. Ex. 37 | C. Ex. 38 | C. Ex. 39 |
|---|---|---|---|---|---|---|---|---|---|---|---|
| Polyester resin (A) | 1st urethane-modified polyester resin | UR-3210 | - | - | - | - | - | - | - | - | - |
| | 2nd urehane-modified polyester resin | UR-4410 | - | - | - | - | - | - | - | - | - |
| | 1st crystalline polyester resin | GM-920 | - | - | - | - | - | - | - | - | - |
| | 2nd crystalline polyester resin | GM-913 | 100 | 100 | 100 | - | - | - | - | - | - |
| | 3rd crystalline polyester resin | UE-9400 | - | - | - | 100 | 100 | 100 | - | - | - |
| | 4th crystalline polyester resin | UE-3400 | - | - | - | - | - | - | 100 | 100 | 100 |
| | 5th crystalline polyester resin | UE-3410 | - | - | - | - | - | - | - | - | - |
| Epoxy resin (B) | Epoxy resin B1 | JER1001 | - | - | - | - | - | - | - | - | - |
| | Epoxy resin B2 | JER1003 | - | - | - | - | - | - | - | - | - |
| | Epoxy resin B3 | JER1004 | - | - | - | - | - | - | - | - | - |
| | Epoxy resin B4 | JER1007 | 25 | - | - | 25 | - | - | 25 | - | - |
| | Epoxy resin B5 | JER1256 | - | 25 | - | - | 25 | - | - | 25 | - |
| | Epoxy resin B6 | JER157S70 | - | - | 25 | - | - | 25 | - | - | 25 |
| | Rubber-modified epoxy resin | EPR-1415-1 | 9 | 9 | 9 | 9 | 9 | 9 | 9 | 9 | 9 |
| Isocyanate-based crosslinking agent (C) | | TPXENATED110N | 10 | 10 | 10 | 10 | 10 | 10 | 10 | 10 | 10 |

| | | | C. Ex. 40 | C. Ex. 41 | C. Ex. 42 | | | | | | |
|---|---|---|---|---|---|---|---|---|---|---|---|
| Polyester resin (A) | 1st urethane-modified polyester resin | UR-3210 | - | - | - | | | | | | |
| | 2nd urehane-modified polyester resin | UR-4410 | - | - | - | | | | | | |
| | 1st crystalline polyester resin | GM-920 | - | - | - | | | | | | |
| | 2nd crystalline polyester resin | GM-913 | - | - | - | | | | | | |
| | 3rd crystalline polyester resin | UE-9400 | - | - | - | | | | | | |
| | 4th crystalline polyester resin | UE-3400 | - | - | - | | | | | | |
| | 5th crystalline polyester resin | UE-3410 | 100 | 100 | 100 | | | | | | |
| Epoxy resin (B) | Epoxy resin B1 | JER1001 | - | - | - | | | | | | |
| | Epoxy resin B2 | JER1003 | - | - | - | | | | | | |
| | Epoxy resin B3 | JER1004 | - | - | - | | | | | | |
| | Epoxy resin B4 | JER1007 | 25 | - | - | | | | | | |
| | Epoxy resin B5 | JER1256 | - | 25 | - | | | | | | |
| | Epoxy resin B6 | JER157S70 | - | - | 25 | | | | | | |
| | Rubber-modified epoxy resin | EPR-1415-1 | 9 | 9 | 9 | | | | | | |
| Isocyanate-based crosslinking agent (C) | | TAKENATE D110N | 10 | 10 | 10 | | | | | | |

Table 2 below shows the physical properties of the various polyester resins (A) mixed in the hot melt adhesive layer compositions according to the Examples (i.e., first urethane-modified polyester resin (UR-3210), second urethane-modified polyester resin (UR-4410), first crystalline polyester resin (GM-920), second crystalline polyester resin (GM-913), third crystalline polyester resin (UE-9400), fourth crystalline polyester resin (UE-3400), and fifth crystalline polyester resin (UE-3410)).

**Table 2**

| | Unit | UR-3210 | UR-4410 | GM-920 | GM-913 | UE-9400 | UE-3400 | UE-3410 |
|---|---|---|---|---|---|---|---|---|
| Manufacturer | - | TOYOBO | TOYOBO | TOYOBO | TOYOBO | UNITIKA | UNITIKA | UNITIKA |
| Resin form | - | Liquid | Liquid | Pellets | Pellets | Sheet | Sheet | Sheet |
| Specific gravity | - | 0.93 | 0.95 | 1.15 | 1.15 | 1.18 | 1.21 | 1.18 |
| Intrinsic viscosity | - | - | - | - | - | 0.71 | 0.92 | 0.97 |
| No. ave. molecular weight | - | 40,000 | 10,000 | 30,000 | 35,000 | 22,000 | 25,000 | 23,000 |
| Softening point | °C | 107 | 120 | 107 | 126 | 117 | 40 | 70 |
| Glass transition temp. | °C | -3 | 11 | -60 | -70 | -7 | -20 | -32 |
| Melt viscosity | dPa - s/200 °C | - | - | 1,000 | 6,500 | - | - | - |
| Hydroxyl value | mgKOH/g | 2 to 3 | 11 | - | - | - | 4 | 3 |
| Acid value | mgKOH/g | Less than 1 | Less than 2 | - | - | - | 2 | 3 |

### [Coating with hot melt adhesive layer composition]

The hot melt adhesive layer composition of each of the Examples and Comparative Examples was diluted with methyl ethyl ketone (MEK) to a solid content of 30 mass %. Next, a PEN film with a hot melt adhesive layer was obtained for each of the Examples and Comparative Examples according to the following steps:
(1) An entire surface on one side of a PEN film (Teonex having a length: 210 mm, a width: 150 mm, a thickness: 100 µm, manufactured by Toyobo Film Solutions Limited) is coated with the diluted hot melt adhesive layer composition. The coating is carried out so that a dried product of the hot melt adhesive layer composition has a thickness of 20 µm.
(2) The PEN film coated with the diluted hot melt adhesive layer composition is dried at 100 °C for a minute to obtain a PEN film with the dried product of the hot melt adhesive layer composition. (3) The PEN film with the dried product of the hot melt adhesive layer composition is allowed to stand in an oven at 40 °C for 48 hours to cause a curing reaction (crosslinking reaction) to proceed. The PEN film with a hot melt adhesive layer is thus obtained.

### (Thickness maintenance rate of hot melt adhesive layer)

The PEN film with the hot melt adhesive layer according to each of the Examples and the PEN film with the hot melt adhesive layer according to each of the Comparative Examples were each evaluated for a thickness maintenance rate of the hot melt adhesive layer after being caused to adhere to the solid electrolyte membrane of the solid polymer fuel cell. In this evaluation, used as an adherend was the membrane electrode assembly (MEA) 20 of the solid polymer fuel cell as shown in Fig. 2. The adhesion of the PEN film with the hot melt adhesive layer according to each of the Examples and each of the Comparative Examples to the membrane electrode assembly (MEA) 20 as the adherend was carried out according to the following steps. No description on the configuration of the membrane electrode assembly (MEA) 20 will be repeated.

### Steps of adhesion

(1) Two sheets of the PEN film with the hot melt adhesive layer are prepared for each of the Examples and each of the Comparative Examples. The PEN film with the hot melt adhesive layer for each of the Examples and each of the Comparative Examples has such an annular shape as to have the outer peripheral edge positioned outside the membrane electrode assembly (MEA) 20 and the inner peripheral edge positioned within the positive electrode side catalyst layer exposed area 202a1 and the negative electrode side catalyst layer exposed area 203a1 when the PEN film with the hot melt adhesive layer is placed on the membrane electrode assembly (MEA) 20. That is, a hollow portion of the PEN film with the hot melt adhesive layer for each of the Examples and each of the Comparative Examples has such a shape as to be slightly larger than the positive electrode gas diffusion layer 202b and the negative electrode gas diffusion layer 203b.
(2) One PEN film with the hot melt adhesive layer is brought into contact with the entire area of the positive electrode side electrolyte membrane exposed area 201a and a part of the positive electrode side catalyst layer exposed area 202a1. Another PEN film with the hot melt adhesive layer is brought into contact with the entire area of the negative electrode side electrolyte membrane exposed area 201b and a part of the negative electrode side catalyst layer exposed area 203a1. Thereby, a sample having two sheets of the PEN film with the hot melt adhesive layer adhering to the membrane electrode assembly (MEA) 20 is obtained.
(3) After the sample is exposed to an atmosphere of 95 °C, a pair of metal gaskets are respectively brought into contact with central portions of exposed surfaces respectively of the one PEN film with the hot melt adhesive layer and the other PEN film with the hot melt adhesive layer. Thereafter, the sample exposed to the atmosphere of 95 °C is held under a load of 7.5 MPa via the pair of metal gaskets for 500 hours. The one PEN film with the hot melt adhesive layer and the other PEN film with the hot melt adhesive layer are thereby caused to adhere to the membrane electrode assembly (MEA) 20 by hot melt adhesion.

The hot melt adhesive layer was evaluated for the thickness maintenance rate according to the following criteria:

### Criteria

Excellent: The thickness (central portion) of the hot melt adhesive layer after the adhesion is 80% or more of the thickness (central portion) of the hot melt adhesive layer before the adhesion.

Bad: The thickness (central portion) of the hot melt adhesive layer after the adhesion is less than 80% of the thickness (central portion) of the hot melt adhesive layer before the adhesion.

Table 3 below shows the evaluation results for the thickness maintenance rates of the hot melt adhesive layers.

### (Embeddability with hot melt adhesive layer)

The PEN film with the hot melt adhesive layer according to each of the Examples and the PEN film with the hot melt adhesive layer according to each of the Comparative Examples were each evaluated for their embeddability with the hot melt adhesive layer after being caused to adhere to the solid electrolyte membrane of the solid polymer fuel cell. The evaluation for the embeddability with the hot melt adhesive layer was carried out by causing two sheets of the PEN film with the hot melt adhesive layer according to each of the Examples and each of the Comparative Examples to adhere to the membrane electrode assembly (MEA) 20 according to the steps above, followed by observing the adhesion state of the two sheets of the PEN film with the hot melt adhesive layer using a laser microscope. The observation magnification of the laser microscope was 400 times. The embeddability with the hot melt adhesive layer was evaluated based on the following criteria:

### Criteria

Excellent: The distance from the outer end edge of the solid electrolyte membrane to the hot melt adhesive layer is 200 µm or less.

Bad: The distance from the outer end edge of the solid electrolyte membrane to the hot melt adhesive layer is more than 200 µm.

Table 3 below shows the evaluation results for the embeddability with the hot melt adhesive layers.

**Table 3**

| | Ex. 1 | Ex. 2 | Ex. 3 | Ex. 4 | Ex. 5 | Ex. 6 | Ex. 7 |
|---|---|---|---|---|---|---|---|
| Thickness maintenance rate | Excellent | Excellent | Excellent | Excellent | Excellent | Excellent | Excellent |
| Embeddability | Excellent | Excellent | Excellent | Excellent | Excellent | Excellent | Excellent |

| | Ex. 8 | Ex. 9 | Ex. 10 | Ex. 11 | Ex. 12 | Ex. 13 | Ex. 14 |
|---|---|---|---|---|---|---|---|
| Thickness maintenance rate | Excellent | Excellent | Excellent | Excellent | Excellent | Excellent | Excellent |
| Embeddability | Excellent | Excellent | Excellent | Excellent | Excellent | Excellent | Excellent |

| | Ex. 15 | Ex. 16 | Ex. 17 | Ex. 18 | Ex. 19 | Ex. 20 | Ex. 21 |
|---|---|---|---|---|---|---|---|
| Thickness maintenance rate | Excellent | Excellent | Excellent | Excellent | Excellent | Excellent | Excellent |
| Embeddability | Excellent | Excellent | Excellent | Excellent | Excellent | Excellent | Excellent |

| | C. Ex. 1 | C. Ex. 2 | C. Ex. 3 | C. Ex. 4 | C. Ex. 5 | C. Ex. 6 | C. Ex. 7 |
|---|---|---|---|---|---|---|---|
| Thickness maintenance rate | Bad | Bad | Bad | Bad | Bad | Bad | Bad |
| Embeddability | Bad | Bad | Bad | Bad | Bad | Bad | Bad |

| | C. Ex. 8 | C. Ex. 9 | C. Ex. 10 | C. Ex. 11 | C. Ex. 12 | C. Ex. 13 | C. Ex. 14 |
|---|---|---|---|---|---|---|---|
| Thickness maintenance rate | Bad | Bad | Bad | Bad | Bad | Bad | Bad |
| Embeddability | Bad | Bad | Bad | Bad | Bad | Bad | Bad |

| | C. Ex. 15 | C. Ex. 16 | C. Ex. 17 | C. Ex. 18 | C. Ex. 19 | C. Ex. 20 | C. Ex. 21 |
|---|---|---|---|---|---|---|---|
| Thickness maintenance rate | Bad | Bad | Bad | Bad | Bad | Bad | Bad |
| Embeddability | Bad | Bad | Bad | Bad | Bad | Bad | Bad |

| | C. Ex. 22 | C. Ex. 23 | C. Ex. 24 | C. Ex. 25 | C. Ex. 26 | C. Ex. 27 | C. Ex. 28 |
|---|---|---|---|---|---|---|---|
| Thickness maintenance rate | Bad | Bad | Bad | Bad | Bad | Bad | Bad |
| Embeddability | Bad | Bad | Bad | Bad | Bad | Bad | Bad |

| | C. Ex. 29 | C. Ex. 30 | C. Ex. 31 | C. Ex. 32 | C. Ex. 33 | C. Ex. 34 | C. Ex. 35 |
|---|---|---|---|---|---|---|---|
| Thickness maintenance rate | Bad | Bad | Bad | Bad | Bad | Bad | Bad |
| Embeddability | Bad | Bad | Bad | Bad | Bad | Bad | Bad |

| | C. Ex. 36 | C. Ex. 37 | C. Ex. 38 | C. Ex. 39 | C. Ex. 40 | C. Ex. 41 | C. Ex. 42 |
|---|---|---|---|---|---|---|---|
| Thickness maintenance rate | Bad | Bad | Bad | Bad | Bad | Bad | Bad |
| Embeddability | Bad | Bad | Bad | Bad | Bad | Bad | Bad |

It can be seen from Table 3 that the PEN film with the hot melt adhesive layer according to each of the Examples was evaluated as "Excellent" for both the thickness maintenance rate and the embeddability. In contrast, it can be seen that the PEN film with the hot melt adhesive layer according to each of the Comparative Examples was evaluated as "Bad" for both the thickness maintenance rate and the embeddability.

Next, as shown below, the hot melt adhesive layer compositions according to Test Examples 1 to 20 were prepared.

### [Test Example 1]

A hot melt adhesive layer composition according to Test Example 1 was obtained in the same mixing composition as in Example 10.

### [Test Example 2]

A hot melt adhesive layer composition according to Test Example 2 was obtained in the same manner as in Test Example 1, except that the mixing amount of the epoxy resin B1 was changed from 25 mass parts to 30 mass parts.

### [Test Example 3]

A hot melt adhesive layer composition according to Test Example 3 was obtained in the same manner as in Test Example 1, except that the mixing amount of the epoxy resin B1 was changed from 25 mass parts to 35 mass parts.

### [Test Example 4]

A hot melt adhesive layer composition according to Test Example 4 was obtained in the same mixing composition as in Example 11.

### [Test Example 5]

A hot melt adhesive layer composition according to Test Example 5 was obtained in the same manner as in Test Example 4, except that the mixing amount of the epoxy resin B2 was changed from 25 mass parts to 30 mass parts.

### [Test Example 6]

A hot melt adhesive layer composition according to Test Example 6 was obtained in the same manner as in Test Example 4, except that the mixing amount of the epoxy resin B2 was changed from 25 mass parts to 35 mass parts.

### [Test Example 7]

A hot melt adhesive layer composition according to Test Example 7 was obtained in the same manner as in Comparative Example 10, except that the mixing amount of the epoxy resin B1 was changed from 25 mass parts to 20 mass parts.

### [Test Example 8]

A hot melt adhesive layer composition according to Test Example 8 was obtained in the same manner as in Comparative Example 11, except that the mixing amount of the epoxy resin B2 was changed from 25 mass parts to 20 mass parts.

### [Test Example 9]

A hot melt adhesive layer composition according to Test Example 9 was obtained in the same mixing composition as in Comparative Example 10.

### [Test Example 10]

A hot melt adhesive layer composition according to Test Example 10 was obtained in the same mixing composition as in Comparative Example 11.

### [Test Example 11]

A hot melt adhesive layer composition according to Test Example 11 was obtained in the same mixing composition as in Test Example 1, except that no epoxy resin B1 was added.

### [Test Example 12]

A hot melt adhesive layer composition according to Test Example 12 was obtained in the same mixing composition as in Comparative Example 12.

### [Test Example 13]

A hot melt adhesive layer composition according to Test Example 13 was obtained in the same mixing composition as in Test Example 1, except that a sixth crystalline polyester resin (trade name "GM-350" manufactured by TOYOBO Co., Ltd.) was used in substitution for the second crystalline polyester resin.

### [Test Example 14]

A hot melt adhesive layer composition according to Test Example 14 was obtained in the same mixing composition as in Test Example 4, except that the sixth crystalline polyester resin was used in substitution for the second crystalline polyester resin.

### [Test Example 15]

A hot melt adhesive layer composition according to Test Example 15 was obtained in the same mixing composition as in Test Example 1, except that a seventh crystalline polyester resin (trade name "GM-900" manufactured by TOYOBO Co., Ltd.) was used in substitution for the second crystalline polyester resin.

### [Test Example 16]

A hot melt adhesive layer composition according to Test Example 16 was obtained in the same mixing composition as in Test Example 4, except that the seventh crystalline polyester resin was used in substitution for the second crystalline polyester resin.

### [Test Example 17]

A hot melt adhesive layer composition according to Test Example 17 was obtained in the same composition as in Test Example 1, except that the mixing amount of the isocyanate-based crosslinking agent (C) (TAKENATE D-110N) was changed from 10 mass parts to 15 mass parts.

### [Test Example 18]

A hot melt adhesive layer composition according to Test Example 18 was obtained in the same composition as in Test Example 4, except that the mixing amount of the isocyanate-based crosslinking agent (C) (TAKENATE D-110N) was changed from 10 mass parts to 15 mass parts.

### [Test Example 19]

A hot melt adhesive layer composition according to Test Example 19 was obtained in the same composition as in Test Example 1, except that the mixing amount of the isocyanate-based crosslinking agent (C) (TAKENATE D-110N) was changed from 10 mass parts to 5 mass parts.

### [Test Example 20]

A hot melt adhesive layer composition according to Test Example 20 was obtained in the same composition as in Test Example 4, except that the mixing amount of the isocyanate-based crosslinking agent (C) (TAKENATE D-110N) was changed from 10 mass parts to 5 mass parts.

Table 4 below shows the mixing composition of the hot melt adhesive layer composition according to each of Test Examples 1 to 20.

**Table 4**

| | | T. Ex. 1 | T. Ex. 2 | T. Ex. 3 | T. Ex. 4 | T. Ex. 5 | T. Ex. 6 | T. Ex. 7 |
|---|---|---|---|---|---|---|---|---|
| Polyester resin (A) | GM-913 | 100 | 100 | 100 | 100 | 100 | 100 | 100 |
| | GM-350 | - | - | - | - | - | - | - |
| | GM-900 | - | - | - | - | - | - | - |
| Epoxy resin (B) | JER1001 | 25 | 30 | 35 | - | - | - | 20 |
| | JER1003 | - | - | - | 25 | 30 | 35 | - |
| | JER1004 | - | - | - | - | - | - | - |
| | EPR-1415-1 | 9 | 9 | 9 | 9 | 9 | 9 | - |
| Isocyanate-based crosslinking agent (C) | TAKENATE D110N | 10 | 10 | 10 | 10 | 10 | 10 | 10 |

| | | T. Ex. 8 | T. Ex. 9 | T. Ex. 10 | T. Ex. 11 | T. Ex. 12 | T. Ex. 13 | T. Ex. 14 |
|---|---|---|---|---|---|---|---|---|
| Polyester resin (A) | GM-913 | 100 | 100 | 100 | 100 | 100 | - | - |
| | GM-350 | - | - | - | - | - | 100 | 100 |
| | GM-900 | - | - | - | - | - | - | - |
| Epoxy resin (B) | JER1001 | - | 25 | - | - | - | 25 | - |
| | JER1003 | 20 | - | 25 | - | - | - | 25 |
| | JER1004 | - | - | - | - | 25 | - | - |
| | EPR-1415-1 | - | - | - | 9 | 9 | 9 | 9 |
| Isocyanate-based crosslinking agent (C) | TAKENATE D110N | 10 | 10 | 10 | 10 | 10 | 10 | 10 |

| | | T. Ex. 15 | T. Ex. 16 | T. Ex. 17 | T. Ex. 18 | T. Ex. 19 | T. Ex. 20 | |
|---|---|---|---|---|---|---|---|---|
| Polyester resin (A) | GM-913 | - | - | 100 | 100 | 100 | 100 | |
| | GM-350 | - | - | - | - | - | - | |
| | GM-900 | 100 | 100 | - | - | - | - | |
| Epoxy resin (B) | JER1001 | 25 | - | 25 | - | 25 | - | |
| | JER1003 | - | 25 | - | 25 | - | 25 | |
| | JER1004 | - | - | - | - | - | - | |
| | EPR-1415-1 | 9 | 9 | 9 | 9 | 9 | 9 | |
| Isocyanate-based crosslinking agent (C) | TAKENATE D110N | 10 | 10 | 15 | 15 | 5 | 5 | |

Table 5 below shows various physical properties of the sixth crystalline polyester resin (GM-350) and the seventh crystalline polyester resin (GM-900).

**Table 5**

| | Unit | GM-350 | GM-900 |
|---|---|---|---|
| Manufacturer | - | TOYOBO | TOYOBO |
| Resin form | - | Pellets | Pellets |
| Specific gravity | - | 1.15 | 1.15 |
| Intrinsic viscosity | - | - | - |
| No. ave. molecular weight | - | 3,500 | 2,500 |
| Softening point | °C | 98 | 112 |
| Glass transition temp. | °C | 3 | -15 |
| Melt viscosity | dPa · s/200 °C | 1,600 | 1,500 |
| Hydroxyl value | mgKOH/g | - | - |
| Acid value | mgKOH/g | - | - |

### [Coating with hot melt adhesive layer composition]

A PEN film with the hot melt adhesive layer according to each of the Test Examples was obtained in the same manner as in the PEN film with the hot melt adhesive layer according to each of the Examples and each of the Comparative Examples, except that the hot melt adhesive layer composition according to each of the Test Examples was used.

### [Preparation of first adhesive sheet]

Two sheets of the PEN film with the hot melt adhesive layer of each of the Test Examples were prepared, and the two sheets of the PEN film with the hot melt adhesive layer overlapped each other to bring their surfaces with the hot melt adhesive layer into abutting contact with each other. Using a laminator adjusted to 140 °C, the two sheets of the PEN film with the hot melt adhesive layer of each of the Test Examples were bonded together by thermocompression bonding to prepare a first adhesive sheet according to each of the Test Examples.

### [Preparation of second adhesive sheet]

The PEN film with the hot melt adhesive layer of each of the Test Examples and a perfluorocarbon sulfonic acid resin sheet (tetrafluoroethylene/perfluoro[2-(fluorosulfonylethoxy)propyl vinyl ether] copolymer membrane (manufactured by DuPont, trade name "NAFIONN-115")) (having the same shape as the film with the hot melt adhesive layer) overlapped each other to bring an exposed surface of the hot melt adhesive layer of the PEN film with the hot melt adhesive layer of each of the Test Examples into abutting contact with one surface of the perfluorocarbon sulfonic acid resin sheet. Using a laminator adjusted to 140 °C, the PEN film with the hot melt adhesive layer of each of the Test Examples and the perfluorocarbon sulfonic acid resin sheet were bonded together by thermocompression bonding to prepare a second adhesive sheet according to each of the Test Examples.

### [Hot water resistance 1]

For the first adhesive sheet of each of the Test Examples, a test specimen having a width of 10 mm and a length of 80 mm was cut out from the first adhesive sheet of each of the Test Examples, and was immersed in hot water at 95 °C for 1000 hours and then cooled to room temperature. Thereafter, the test specimen was evaluated for hot water resistance based on the following criteria:
- Excellent: No peeling observed after the immersion.
- Bad: Peeling observed after the immersion.

### [Acid resistance 1]

For the first adhesive sheet of each of the Test Examples, a test specimen having a width of 10 mm and a length of 80 mm was cut out from the first adhesive sheet of each of the Test Examples, and was immersed in dilute sulfuric acid of pH 2 at 95 °C for 1000 hours and then cooled to room temperature. Thereafter, the test specimen was evaluated for acid resistance based on the following criteria:
- Excellent: No peeling observed after the immersion.
- Bad: Peeling observed after the immersion.

### [Alcohol resistance 1]

For the first adhesive sheet of each of the Test Examples, a test specimen having a width of 10 mm and a length of 80 mm was cut out from the first adhesive sheet of each of the Test Examples, and was immersed in a water-ethylene glycol mixed solution (with a mixing proportion of ethylene glycol of 50 volume %) at 95 °C for 1000 hours and then cooled to room temperature. Thereafter, the test specimen was evaluated for alcohol resistance based on the following criteria:
- Excellent: No peeling observed after the immersion.
- Bad: Peeling observed after the immersion.

### [Hot water resistance 2]

For the second adhesive sheet of each of the Test Examples, a test specimen having a width of 10 mm and a length of 80 mm was cut out from the second adhesive sheet of each of the Test Examples, and was immersed in hot water at 95 °C for 1000 hours and then cooled to room temperature. Thereafter, the test specimen was evaluated for hot water resistance based on the following criteria:
- Excellent: No peeling observed after the immersion.
- Bad: Peeling observed after the immersion.

### [Acid resistance 2]

For the second adhesive sheet of each of the Test Examples, a test specimen having a width of 10 mm and a length of 80 mm was cut out from the second adhesive sheet of each of the Test Examples, and was immersed in dilute sulfuric acid of pH 2 at 95 °C for 1000 hours and then cooled to room temperature. Thereafter, the test specimen was evaluated for acid resistance based on the following criteria:
- Excellent: No peeling observed after the immersion.
- Bad: Peeling observed after the immersion.

### [Alcohol resistance 2]

For the second adhesive sheet of each of the Test Examples, a test specimen having a width of 10 mm and a length of 80 mm was cut out from the second adhesive sheet of each of the Test Examples, and was immersed in a water-ethylene glycol mixed solution (with a mixing proportion of ethylene glycol of 50 volume %) at 95 °C for 1000 hours and then cooled to room temperature. Thereafter, the test specimen was evaluated for alcohol resistance based on the following criteria:
- Excellent: No peeling observed after the immersion.
- Bad: Peeling observed after the immersion.

Table 6 below shows the results of evaluations of the first adhesive sheet of each of the Test Examples for hot water resistance 1, acid resistance 1, and alcohol resistance 1, and the results of evaluations of the second adhesive sheets of each of the Test Examples for hot water resistance 2, acid resistance 2, and alcohol resistance 2.

**Table 6**

| Evaluation item | | T. Ex. 1 | T. Ex. 2 | T. Ex. 3 | T. Ex. 4 | T. Ex. 5 | T. Ex. 6 | T. Ex. 7 |
|---|---|---|---|---|---|---|---|---|
| 1st adhesive sheet | Hot water resistance 1 | Excellent | Excellent | Excellent | Excellent | Excellent | Excellent | Bad |
| | Acid resistance 1 | Excellent | Excellent | Excellent | Excellent | Excellent | Excellent | Bad |
| | Alcohol resistance 1 | Excellent | Excellent | Excellent | Excellent | Excellent | Excellent | Bad |
| 2nd adhesive sheet | Hot water resistance 2 | Excellent | Excellent | Excellent | Excellent | Excellent | Excellent | Bad |
| | Acid resistance 2 | Excellent | Excellent | Excellent | Excellent | Excellent | Excellent | Bad |
| | Alcohol resistance 2 | Excellent | Excellent | Excellent | Excellent | Excellent | Excellent | Bad |

| Evaluation item | | T. Ex. 8 | T. Ex. 9 | T. Ex. 10 | T. Ex. 11 | T. Ex. 12 | T. Ex. 13 | T. Ex. 14 |
|---|---|---|---|---|---|---|---|---|
| 1st adhesive sheet | Hot water resistance 1 | Bad | Bad | Bad | Bad | Bad | Bad | Bad |
| | Acid resistance 1 | Bad | Bad | Bad | Bad | Bad | Bad | Bad |
| | Alcohol resistance 1 | Bad | Bad | Bad | Bad | Bad | Bad | Bad |
| 2nd adhesive sheet | Hot water resistance 2 | Bad | Bad | Bad | Bad | Bad | Bad | Bad |
| | Acid resistance 2 | Bad | Bad | Bad | Bad | Bad | Bad | Bad |
| | Alcohol resistance 2 | Bad | Bad | Bad | Bad | Bad | Bad | Bad |

| Evaluation item | | T. Ex. 15 | T. Ex. 16 | T. Ex. 17 | T. Ex. 18 | T. Ex. 19 | T. Ex. 20 | |
|---|---|---|---|---|---|---|---|---|
| 1st adhesive sheet | Hot water resistance 1 | Bad | Bad | Bad | Bad | Bad | Bad | |
| | Acid resistance 1 | Bad | Bad | Bad | Bad | Bad | Bad | |
| | Alcohol resistance 1 | Bad | Bad | Bad | Bad | Bad | Bad | |
| 2nd adhesive sheet | Hot water resistance 2 | Bad | Bad | Bad | Bad | Bad | Bad | |
| | Acid resistance 2 | Bad | Bad | Bad | Bad | Bad | Bad | |
| | Alcohol resistance 2 | Bad | Bad | Bad | Bad | Bad | Bad | |

It is understood from Table 6 above that both the first adhesive sheet and the second adhesive sheet in each of Test Examples 1 to 6 were evaluated as "Excellent" for all evaluation items, that is, had no peeling observed. In contrast, it is understood that both the first adhesive sheet and the second adhesive sheet in each of Test Examples 7 to 20 were evaluated as "Bad" for all evaluation items, that is, had peeling observed.

### REFERENCE SIGNS LIST

10: Hot melt adhesive sheet
20: Membrane electrode assembly (MEA)
201: Solid electrolyte membrane
202: Positive electrode
203: Negative electrode
10a: Base material
10b: Adhesive layer
201a: Positive electrode side electrolyte membrane exposed area
201b: Negative electrode side electrolyte membrane exposed area
202a: Positive electrode catalyst layer
202b: Positive electrode gas diffusion layer
203a: Negative electrode catalyst layer
203b: Negative electrode gas diffusion layer
202a1: Positive electrode side catalyst layer exposed area
203a1: Negative electrode side catalyst layer exposed area
L1: First boundary line
L2: Second boundary line
L3: Third boundary line
L4: Fourth boundary line

## Claims

1. A hot melt adhesive sheet comprising a base material and an adhesive layer laminated on at least one surface of the base material, wherein
the adhesive layer is made of a hot melt adhesive,
the hot melt adhesive comprises a crosslinked product of an adhesive composition comprising a crosslinking agent, the adhesive composition comprises a polyester resin, an epoxy resin, and an isocyanate-based crosslinking agent,
the epoxy resin comprises a bisphenol-type epoxy resin and a rubber-modified epoxy resin, and
the bisphenol-type epoxy resin has an epoxy equivalent of 450 g/eq or more and 1000 g/eq or less.

2. The hot melt adhesive sheet according to claim 1, wherein the polyester resin comprises a crystalline polyester resin having a softening point of 120 °C or more.

3. The hot melt adhesive sheet according to claim 1 or 2, wherein the bisphenol-type epoxy resin comprises a bisphenol A type epoxy resin.

4. The hot melt adhesive sheet according to claim 1 or 2, wherein the rubber-modified epoxy resin is a NBR-modified epoxy resin.

5. The hot melt adhesive sheet according to claim 1 or 2, the hot melt adhesive sheet being configured to adhere to a solid electrolyte membrane of a solid polymer fuel cell for use.
